# EUROPEAN PATENT APPLICATION

(11) **EP 4 693 040 A1**
(43) Date of publication of application: **11.02.2026**
(21) Application number: 23934625.7
(22) Date of filing: 28.04.2023
(51) Int. Cl.: G06F 9/46, G06F 9/50, G06F 15/173

(54) **TRANSACTION FLOW PROCESSING SYSTEM, METHOD, AND RELATED APPARATUS**

(71) Applicant: Huawei Technologies Co., Ltd., Shenzhen, Guangdong 518129 (CN)
(72) Inventor: ZHANG, Chuwen, Shenzhen, Guangdong 518129 (CN); TAN, Kun, Shenzhen, Guangdong 518129 (CN); LI, Lijun, Shenzhen, Guangdong 518129 (CN); QU, Xiangfeng, Shenzhen, Guangdong 518129 (CN)
(74) Representative: Gill Jennings & Every LLP
(86) International application number: PCT/CN2023/091720
(87) International publication number: WO 2024/221433

(57) **Abstract**

Embodiments of this application disclose a transaction flow processing system and method, and a related apparatus. The system includes a first apparatus and a second apparatus. The first apparatus is configured to send a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow. The second apparatus is configured to receive the first transaction, and execute the first transaction. The first apparatus is further configured to send the second transaction after execution of the first transaction in the transaction flow is completed, where the second transaction includes the second place order flag, and the second place order flag indicates that the second transaction is executed after execution of the first transaction in the transaction flow is completed. The second apparatus is further configured to receive the second transaction, and execute the second transaction. In this application, processing performance in communication can be improved.

## Description

### TECHNICAL FIELD

This application relates to the field of communication technologies, and specifically, to a transaction flow processing system and method, and a related apparatus.

### BACKGROUND

In a remote direct memory access (remote direct memory access, RDMA) technology, a unified bus (Unified Bus, UB) communication technology, a multi-thread concurrent programming technology, or other technologies, if all work queue elements (work queue elements, WQEs) in a transaction queue (transaction queue, TAQ) of a source can be destined for only a same destination, communication performed between the source and the destination is connection-oriented. If the WQEs in the TAQ at the source may be destined for a plurality of destinations, communication performed between the source and the plurality of destinations is connectionless-oriented.

Connection-oriented communication is applicable to a transmission service that requires end-to-end reliability, a high bandwidth, and a low delay, and has been widely used in high-performance computing, data center networks, and other scenarios. However, as a quantity of devices used for computing or a scale of a data center network increases, a large quantity of connections need to be established in the connection-oriented communication manner. This increases processing complexity and additional resource overheads. In view of this, in conventional technologies, for example, Amazon scalable reliable datagram (scalable reliable datagram, SRD) effectively reduces a quantity of connections through connectionless-oriented communication, and can be deployed in a large-scale network with more than 10K nodes.

However, in connectionless-oriented communication, WQEs in a send queue (SQ) of a source may be destined for a plurality of destinations, and the plurality of destinations separately process received transactions and feed back completion statuses to the source. However, currently, a communication delay in connectionless-oriented communication is long, resulting in low system processing performance. Therefore, how to improve processing performance in connectionless-oriented communication is a technical problem to be urgently resolved by a person skilled in the art.

### SUMMARY

This application provides a transaction flow processing system and method, and a related apparatus, to improve processing performance in communication.

According to a first aspect, this application provides a transaction flow processing system. The system includes a first apparatus and a second apparatus.

The first apparatus is configured to send a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow.

The second apparatus is configured to receive the first transaction, and execute the first transaction.

The first apparatus is further configured to send the second transaction after execution of the first transaction in the transaction flow is completed, where the second transaction includes the second place order flag, and the second place order flag indicates that the second transaction is executed after execution of the first transaction in the transaction flow is completed.

The second apparatus is further configured to receive the second transaction, and execute the second transaction.

For example, in a UB transport and baseline transaction specification, the first place order flag may be represented by RO. RO is short for relaxed order (relaxed order). Alternatively, the first place order flag may also be referred to as a relaxed place order flag.

For example, in the UB transport and baseline transaction specification, the second place order flag may be represented by SO. SO is short for strong order (strong order). Alternatively, the second place order flag may also be referred to as a strong place order flag.

Optionally, the first place order flag is located in a fourth byte in a field corresponding to a transaction layer of a packet corresponding to the first transaction, the second place order flag is located in a fourth byte in a field corresponding to a transaction layer of a packet corresponding to the second transaction, and a third place order flag is located in a fourth byte in a field corresponding to a transaction layer of a packet corresponding to a third transaction.

A transaction flow is a transaction sequence in which a plurality of transactions are arranged in order. For example, the transaction flow is a sequence of transactions that enter a same transaction queue (transaction queue, TAQ). Alternatively, for example, the transaction flow is a sequence of transactions arranged in order at a transaction layer by using a data structure like an array or a linked list. In embodiments of this application, an example in which the transaction flow is a sequence of transactions that enter a same TAQ is mainly used for description. An order number (referred to as a TAQ number) is set for each transaction in a TAQ, and an order number of a transaction that enters the TAQ first is less than an order number of a transaction that enters the TAQ later.

In this solution, constraint information (for example, the first place order flag or the second place order flag) that is in a transaction and that indicates a place order of the transaction may be used to flexibly arrange the place order of the transaction. This reduces waiting time for sending the transaction caused by strictly executing the transaction according to a queue order (sorted by using numbers) of the transaction in the transaction flow. This reduces a communication delay and performance losses of the transaction. For example, the first place order flag is the relaxed place order flag, and may be used together with the second place order flag representing the strong place order flag. For example, sending of the transaction that carries the first place order flag may not be constrained by a queue order of the transaction in the transaction flow, but sending of the transaction that carries the second place order flag needs to meet a specific condition. The condition is that the transaction can be sent only after execution of all transactions, in the transaction flow, whose numbers are less than that of the transaction and that carry the first place order flag and/or the second place order flag is completed. The transaction that carries the first place order flag may be understood as a depended transaction, and the transaction that carries the second place order flag may be understood as a depending transaction. In this case, in this solution, on one hand, the performance losses caused by strictly executing the transaction in the queue order of the transaction in the transaction flow is reduced, and on the other hand, a transaction having a dependency relationship can be executed in an order of the dependency relationship. This ensures correct transaction processing logic. In addition, the constraint information that is in the transaction and that indicates the place order of the transaction is easy to implement, and can simply and effectively indicate a place order between transactions. This further facilitates identification and operation of a network interface card and improves processing efficiency.

In a possible implementation, the first apparatus is further configured to send the third transaction in the transaction flow, where the third transaction includes the third place order flag, and the third place order flag indicates that the transaction including the third place order flag has no order.

For example, in the UB transport and baseline transaction specification, the third place order flag may be represented by NO. NO is short for no order (no order). Alternatively, the third place order flag may also be referred to as an out-of-order execution flag.

In this solution, the third place order flag is the out-of-order execution flag, and a place order of the transaction is not constrained by a queue order of the transaction in the transaction flow, or the transaction that carries the third place order flag may be understood as a transaction without a dependency relationship. Therefore, the transaction may be sent without waiting for an execution result of another transaction. This reduces waiting time for sending, and reduces the communication delay and the performance losses of the transaction.

In a possible implementation, the first apparatus is further configured to: in a process of waiting for completion of execution of the first transaction, send a fourth transaction, where the fourth transaction includes the first place order flag, a number of the fourth transaction is greater than that of the second transaction, and the fourth transaction, the first transaction, and the second transaction all belong to the same transaction flow.

In this solution, if execution of not all transactions (that is, first transactions), in the transaction flow, whose numbers are less than that of the transaction (that is, the second transaction) carrying the second place order flag and that carry the first place order flag and/or the second place order flag is completed, the second transaction is skipped, and the transaction that carries the first place order flag and that is after the second transaction is first sent, so that a queue is not blocked, a communication delay is reduced, and system performance is improved.

In a possible implementation, the first apparatus is further configured to: in the process of waiting for completion of execution of the first transaction, send a fifth transaction, where the fifth transaction includes a third place order flag, the third place order flag indicates that the transaction including the third place order flag has no order, a number of the fifth transaction is greater than that of the second transaction, and the fifth transaction, the first transaction, and the second transaction all belong to the same transaction flow.

In this solution, if execution of not all transactions (that is, first transactions), in the transaction flow, whose numbers are less than that of the transaction (that is, the second transaction) carrying the second place order flag and that carry the first place order flag and/or the second place order flag is not completed, the second transaction is skipped, and the transaction that carries the third place order flag and that is after the second transaction is first sent, so that the queue is not blocked, the communication delay is reduced, and system performance is improved.

In a possible implementation, the first apparatus is further configured to: send a sixth transaction when execution of all transactions, in the transaction flow, whose numbers are less than that of the sixth transaction is completed, where the sixth transaction includes a fourth place order flag, and the fourth place order flag indicates that the sixth transaction is executed after execution of all the transactions, in the transaction flow, whose numbers are less than that of the sixth transaction is completed.

In this solution, the transaction flow further includes the transaction that carries the fence flag (that is, the fourth place order flag), and the flag indicates that the transaction that carries the flag is sent after execution of all the transactions before the transaction flow is completed. That is, this solution may be further compatible with a FENCE mechanism, and is applicable to flexible scenarios.

In a possible implementation, the first apparatus is further configured to send a first completion order flag to the second apparatus, where the first completion order flag is associated with the first transaction, the first completion order flag indicates the second apparatus to generate completion information of the first transaction (referred to as a first-type completion order flag) in order or indicates the second apparatus to generate the completion information of the first transaction (referred to as a second-type completion order flag) in an out-of-order manner, and the completion information of the first transaction indicates that execution of the first transaction has been completed.

For example, in the UB transport and baseline transaction specification, the first-type completion order flag may also be represented by NO, and is referred to as an out-of-order completion flag.

For example, in the UB transport and baseline transaction specification, the second-type completion order flag may also be represented by CO. CO is short for completion order (Completion Order), and may also be referred to as an order-preserving completion flag.

Optionally, the first completion order flag is located in the fourth byte in the field corresponding to the transaction layer of the packet corresponding to the first transaction.

In this solution, when the first apparatus sends the first transaction to the second apparatus, the completion order flag is further carried, to indicate an occasion at which the second apparatus generates the completion information, so that a transaction completion status can be flexibly notified. For example, if the completion order flag indicates that the completion information is generated in order, existing interface semantics completed in order may be compatible. If the completion order flag indicates that the completion information can be generated without waiting after a transaction is completed, in other words, the completion information is generated in the out-of-order manner, and a requirement of a low-latency transaction can be met well. This is selected based on a specific requirement. The value is flexible and applicable. Flexibility is high and applicability is strong.

According to a second aspect, this application provides a transaction flow processing method. The method includes:
sending a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow; and
sending the second transaction after execution of the first transaction in the transaction flow is completed, where the second transaction includes the second place order flag, and the second place order flag indicates that the second transaction is executed after execution of the first transaction in the transaction flow is completed.

In a possible implementation, the method further includes: sending a third transaction in the transaction flow, where the third transaction includes a third place order flag, and the third place order flag indicates that the third transaction has no order.

In a possible implementation, the method further includes: in a process of waiting for completion of execution of the first transaction, sending a fourth transaction, where the fourth transaction includes the first place order flag, a number of the fourth transaction is greater than that of the second transaction, and the fourth transaction, the first transaction, and the second transaction all belong to the same transaction flow.

In a possible implementation, the method further includes: in the process of waiting for completion of execution of the first transaction, sending a fifth transaction, where the fifth transaction includes a third place order flag, the third place order flag indicates that the transaction including the third place order flag has no order, a number of the fifth transaction is greater than that of the second transaction, and the fifth transaction, the first transaction, and the second transaction all belong to the same transaction flow.

In a possible implementation, the method further includes: sending a sixth transaction when execution of all transactions, in the transaction flow, whose numbers are less than that of the sixth transaction is completed, where the sixth transaction includes a fourth place order flag, and the fourth place order flag indicates that the sixth transaction is executed after execution of all the transactions, in the transaction flow, whose numbers are less than that of the sixth transaction is completed.

In a possible implementation, the method further includes: sending a first completion order flag to a second apparatus, where the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

In a possible implementation, the first completion order flag is located in a fourth byte in a field corresponding to a transaction layer of a packet corresponding to the first transaction.

In a possible implementation, the first place order flag is located in a fourth byte in a field corresponding to a transaction layer of a packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

According to a third aspect, this application provides a transaction flow processing method. The method includes:
receiving a first transaction and a first completion order flag, where the first completion order flag is associated with the first transaction, the first completion order flag indicates a second apparatus to generate completion information of the first transaction in order or indicates the second apparatus to generate the completion information of the first transaction in an out-of-order manner, and the completion information of the first transaction indicates that execution of the first transaction has been completed;
executing the first transaction; and
generating the completion information of the first transaction based on the first completion order flag.

In a possible implementation, the first completion order flag is located in a fourth byte in a field corresponding to a transaction layer of a packet corresponding to the first transaction.

According to a fourth aspect, this application provides a transaction flow processing apparatus. The apparatus includes:
a sending unit, configured to send a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow, where
the sending unit is further configured to send the second transaction after execution of the first transaction in the transaction flow is completed, where the second transaction includes the second place order flag, and the second place order flag indicates that the second transaction is executed after execution of the first transaction in the transaction flow is completed.

In a possible implementation, the sending unit is further configured to send a third transaction in the transaction flow, where the third transaction includes a third place order flag, and the third place order flag indicates that the third transaction has no order.

In a possible implementation, the sending unit is further configured to: in a process of waiting for completion of execution of the first transaction, send a fourth transaction, where the fourth transaction includes the first place order flag, a number of the fourth transaction is greater than that of the second transaction, and the fourth transaction, the first transaction, and the second transaction all belong to the same transaction flow.

In a possible implementation, the sending unit is further configured to: in the process of waiting for completion of execution of the first transaction, send a fifth transaction, where the fifth transaction includes a third place order flag, the third place order flag indicates that the transaction including the third place order flag has no order, a number of the fifth transaction is greater than that of the second transaction, and the fifth transaction, the first transaction, and the second transaction all belong to the same transaction flow.

In a possible implementation, the sending unit is further configured to send a sixth transaction when execution of all transactions, in the transaction flow, whose numbers are less than that of the sixth transaction is completed, where the sixth transaction includes a fourth place order flag, and the fourth place order flag indicates that the sixth transaction is executed after execution of all the transactions, in the transaction flow, whose numbers are less than that of the sixth transaction is completed.

In a possible implementation, the sending unit is further configured to send a first completion order flag to a second apparatus, where the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

In a possible implementation, the first completion order flag is located in a fourth byte in a field corresponding to a transaction layer of a packet corresponding to the first transaction.

In a possible implementation, the first place order flag is located in a fourth byte in a field corresponding to a transaction layer of a packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

According to a fifth aspect, this application provides a transaction flow processing apparatus. The apparatus includes:
a receiving unit, configured to receive a first transaction and a first completion order flag, where the first completion order flag is associated with the first transaction, the first completion order flag indicates a second apparatus to generate completion information of the first transaction in order or indicates the second apparatus to generate the completion information of the first transaction in an out-of-order manner, and the completion information of the first transaction indicates that execution of the first transaction has been completed; and
a processing unit, configured to: execute the first transaction; and generate the completion information of the first transaction based on the first completion order flag.

In a possible implementation, the first completion order flag is located in a fourth byte in a field corresponding to a transaction layer of a packet corresponding to the first transaction.

According to a sixth aspect, this application provides a transaction flow processing apparatus. The transaction flow processing apparatus includes a processor and a storage. The storage is coupled to the processor. When executing a computer program or computer instructions stored in the storage, the processor may implement the method in any implementation of the second aspect. The transaction flow processing apparatus may further include a communication interface. The communication interface is configured for communication between the transaction flow processing apparatus and another apparatus. For example, the communication interface may be a transceiver, a circuit, a bus, a module, or another type of communication interface.

In a possible implementation, the transaction flow processing apparatus may include:
the storage, configured to store the computer program or the computer instructions; and
the processor, configured to:
   send a first transaction through the communication interface, where a number of the first transaction is less than that of a second transaction, the first transaction includes a first place order flag or a second place order flag, both the first place order flag and the second place order flag indicate a place order of transactions, and the first transaction and the second transaction belong to a same transaction flow; and
   send the second transaction through the communication interface after execution of the first transaction in the transaction flow is completed, where the second transaction includes the second place order flag, and the second place order flag indicates that the second transaction is executed after execution of the first transaction in the transaction flow is completed.

It should be noted that, in this application, the computer program or the computer instructions in the storage may be pre-stored, or may be downloaded from the internet and stored when the transaction flow processing apparatus is used. A source of the computer program or the computer instructions in the storage is not specifically limited in this application. The coupling in this embodiment of this application may be an indirect coupling or a connection between apparatuses, units, or modules in an electrical form, a mechanical form, or another form, and is used for information exchange between the apparatuses, the units, or the modules.

In a possible implementation, the transaction flow processing apparatus may be a communication device that can implement the method described in any implementation of the second aspect, or may be a chip, a processor, a processing system, a network interface card, or a component module obtained in any combination thereof in the communication device, or the like.

According to a seventh aspect, this application provides a transaction flow processing apparatus. The transaction flow processing apparatus includes a processor and a storage. The storage is coupled to the processor. When executing a computer program or computer instructions stored in the storage, the processor may implement the method in any implementation of the third aspect. The transaction flow processing apparatus may further include a communication interface. The communication interface is configured for communication between the transaction flow processing apparatus and another apparatus. For example, the communication interface may be a transceiver, a circuit, a bus, a module, or another type of communication interface.

In a possible implementation, the transaction flow processing apparatus may include:
the storage, configured to store the computer program or the computer instructions; and
the processor, configured to:
   receive a first transaction and a first completion order flag through the communication interface, where the first completion order flag is associated with the first transaction, the first completion order flag indicates a second apparatus to generate completion information of the first transaction in order or indicates the second apparatus to generate the completion information of the first transaction in an out-of-order manner, and the completion information of the first transaction indicates that execution of the first transaction has been completed; and
   execute the first transaction; and generate the completion information of the first transaction based on the first completion order flag.

It should be noted that, in this application, the computer program or the computer instructions in the storage may be pre-stored, or may be downloaded from the internet and stored when the transaction flow processing apparatus is used. A source of the computer program or the computer instructions in the storage is not specifically limited in this application. The coupling in this embodiment of this application may be an indirect coupling or a connection between apparatuses, units, or modules in an electrical form, a mechanical form, or another form, and is used for information exchange between the apparatuses, the units, or the modules.

In a possible implementation, the transaction flow processing apparatus may be a communication device that can implement the method described in any implementation of the third aspect, or may be a chip, a processor, a processing system, a network interface card, or a component module obtained in any combination thereof in the communication device, or the like.

According to an eighth aspect, this application provides a computer-readable storage medium. The computer-readable storage medium stores a computer program or computer instructions, and the computer program or the computer instructions are executed by a processor to implement the method in any implementation of the second aspect.

According to a ninth aspect, this application provides a computer-readable storage medium. The computer-readable storage medium stores a computer program or computer instructions, and the computer program or the computer instructions are executed by a processor to implement the method in any implementation of the third aspect.

According to a tenth aspect, this application provides a computer program product. When the computer program product is executed by a processor, the method in any implementation of the second aspect is implemented.

According to an eleventh aspect, this application provides a computer program product. When the computer program product is executed by a processor, the method in any implementation of the third aspect is implemented.

The solutions provided in the second aspect to the eleventh aspect are for implementing or collaboratively implementing the system provided in the first aspect, and therefore, can achieve advantageous effects the same as or corresponding to those in the first aspect. Details are not described herein again.

### BRIEF DESCRIPTION OF DRAWINGS

FIG. 1 is a diagram of an architecture of a connectionless-oriented communication protocol stack;
FIG. 2 is a diagram of an architecture of a connectionless-oriented communication system;
FIG. 3 is a schematic flowchart of a transaction flow processing method;
FIG. 4 is a diagram of a structure of a communication device;
FIG. 5 is a diagram of a transaction dependency relationship;
FIG. 6 is a diagram of a structure of a communication device;
FIG. 7 to FIG. 11 are diagrams of related bitmap flags;
FIG. 12 is a diagram of a structure of a transaction;
FIG. 13 is a diagram of a partial structure of a control field;
FIG. 14 is a diagram of a structure of a transaction header of a packet;
FIG. 15 is a diagram of controlling a transaction place order;
FIG. 16 is a diagram of a transaction flow processing system and a transaction flow processing procedure thereof; and
FIG. 17 to FIG. 19 are diagrams of structures of apparatuses.

### DESCRIPTION OF EMBODIMENTS

The following describes embodiments of this application by using accompanying drawings in embodiments of this application as examples. In the specification, claims, and the accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. "Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In embodiments of this application, embodiments are independent of each other, that is, embodiments are not mutually limited or constrained. Unless otherwise specified and a logical conflict occurs, terms and/or descriptions in various embodiments are consistent and may be referenced by each other. Technical features in different embodiments may be combined to form a new embodiment based on an internal logical relationship of the technical features.

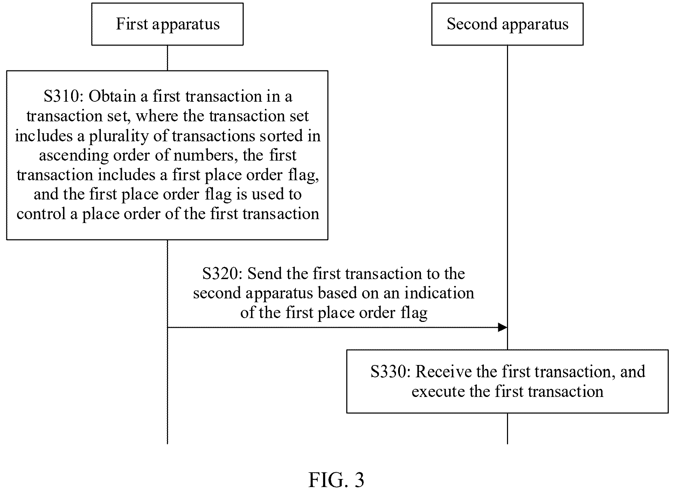

First, related terms in embodiments of this application are explained.
1. A transaction is an independent operation initiated by a user. For example, the operation may be a memory operation or a message operation. For example, in RDMA, a two-sided operation or a one-sided operation is a transaction. The two-sided operation is, for example, a send/receive (send/receive) operation. The one-sided operation is, for example, a write (write) operation or a read (read) operation. Alternatively, for example, a write operation, a read operation, or a send/receive operation in a unified bus (Unified Bus, UB) communication technology may be a transaction. Alternatively, for example, in multi-threaded concurrent programming, an asynchronous atomic memory operation, namely, a compare and swap (compare and swap, CAS) operation, is a transaction. It may be understood that the examples herein constitute no limitation on embodiments of this application.
2. Source and destination: In embodiments of this application, an apparatus that sends a transaction is a source, and an apparatus that receives and executes the transaction sent by the source is a destination. The source and the destination may be, for example, communication devices, a network interface card and/or a processor included in a communication device, or the like.
3. A transaction flow is a transaction sequence in which a plurality of transactions are arranged in order. For example, the transaction flow is a sequence of transactions that enter a same transaction queue (transaction queue, TAQ). Alternatively, for example, the transaction flow is a sequence of transactions arranged in order at a transaction layer by using a data structure like an array or a linked list. In embodiments of this application, an example in which the transaction flow is a sequence of transactions that enter a same TAQ is mainly used for description. An order number (referred to as a TAQ number) is set for each transaction in a TAQ, and an order number of a transaction that enters the TAQ first is less than an order number of a transaction that enters the TAQ later. If an order number of a transaction A is less than an order number of a transaction B, it indicates that the transaction A is a transaction arranged before the transaction B, or the transaction B is a transaction arranged after the transaction A.
4. A transaction place order (place order) is a place order of transactions in a same transaction flow at a destination. Generally, a transaction in a transaction queue is scheduled from the transaction queue to a transport queue (transport queue, TPQ), sent to the destination, and then executed at the destination. In embodiments of this application, an order of scheduling the transactions at a source is controlled based on the transaction place order, to further control the place order of the transactions at the destination. For specific implementation, refer to descriptions in subsequent embodiments. Details are not described herein.
5. Transaction source completion order: After execution of a transaction in a same transaction flow is completed, a completion queue element (complete queue element, CQE) is generated at a source, to notify an upper-layer application of the source of an order in which execution of the transaction is completed. For example, the transaction source completion order may also be referred to as a transaction sending completion order. For example, the source may learn, by receiving a transaction layer acknowledge character (acknowledge character, ACK) from a destination, that execution of the transaction has been completed. For descriptions of the transaction layer ACK, refer to related descriptions in subsequent step S330 in FIG. 3. Details are not described herein temporarily.
6. Transaction destination completion order: After execution of a transaction in a same transaction flow is completed, a CQE is generated at a destination, to notify an upper-layer application of the destination of an order in which execution of the transaction is completed. For example, the transaction destination completion order may also be referred to as a transaction receiving completion order.
7. Order preservation: In a same transaction flow, if a transaction A is arranged before a transaction B and the transaction A is executed at a destination before the transaction B, it is considered that a place order of the transaction A and the transaction B is order preserving. Similarly, if the transaction A is arranged before the transaction B and the transaction A completes notification to an upper-layer application at a source before the transaction B, it is considered that a source completion order of the transaction A and the transaction B is order preserving. If the transaction A is arranged before the transaction B and the transaction A completes notification to an upper-layer application at the destination before the transaction B, it is considered that a destination completion order of the transaction A and the transaction B is order preserving. If transactions do not meet an order-preserving requirement, the transactions are out-of-order.
8. A strong transaction order indicates that a place order, a source completion order, and a destination completion order of all transactions in a same transaction flow are order preserving. The place order, the source completion order, and the destination completion order of the transactions are collectively referred to as a transaction order.
9. Weak transaction order (weak transaction order): A weak transaction order indicates that only a transaction with a dependency relationship in a same transaction flow needs to perform order preservation, and a place order of a transaction without a dependency relationship is not constrained. In a possible implementation, order preservation needs to be performed on a source completion order of a transaction flow with a weak transaction order. In another possible implementation, transactions of a transaction flow with a weak transaction order at a same destination may be configured to be in an order-preserving completion mode and an out-of-order completion mode.
10. Connection-oriented communication/connectionless-oriented communication: If all work queue elements (work queue elements, WQEs) in a transaction queue at a source can be destined for only a same destination, connection-oriented communication is performed between the source and the destination. If WQEs in a transaction queue at a source may be destined for a plurality of destinations, connectionless-oriented communication is performed between the source and the plurality of destinations.
11. Transaction dependency relationship: If a transaction A can be executed only after execution of a transaction B is completed, it may be considered that the transaction A depends on the transaction B. The transaction A is a depending transaction, and the transaction B is a depended transaction. For example, if the transaction A can be executed only after execution of the transaction B is completed, it may also be considered that the transaction A and the transaction B have an order-preserving requirement. In other words, the transaction A and the transaction B on which the transaction A depends have an order-preserving requirement. If a transaction has no dependency relationship, the transaction has no order-preserving requirement.

The following describes a system architecture and an application scenario in embodiments of this application.

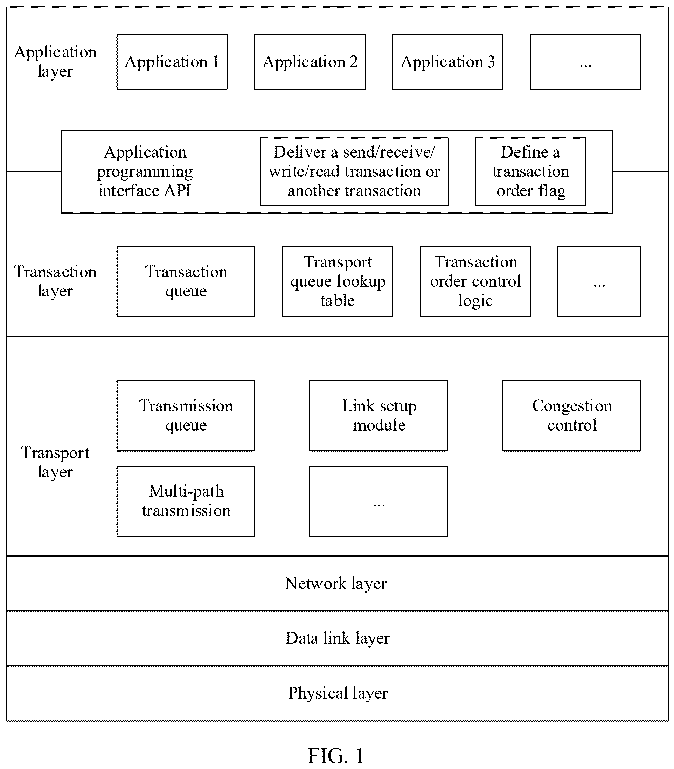

For example, refer to FIG. 1. FIG. 1 is a diagram of an architecture of a connectionless-oriented communication protocol stack. The architecture includes an application layer, a transaction layer, a transport layer, a network layer, a data link layer, and a physical layer.

The application layer is directly oriented to users, and provides specific or commonly used applications (Application, APP) for the users. For example, in embodiments of this application, a plurality of application scenarios may be supported. For example, application scenarios such as high-performance computing, machine learning, distributed storage, and database may be supported. Applications corresponding to the application scenarios may be provided for the users at the application layer.

The application layer and the transaction layer perform interactive communication through an application programming interface (application programming interface, API). For example, the application at the application layer may deliver a transaction to the transaction layer through the API. For example, the application may deliver a send/receive two-sided operation transaction, a write operation transaction, a read operation transaction, or the like to the transaction layer through the API. In addition, in this embodiment of this application, a transaction order flag is further defined in the API, to control a weak transaction order of a transaction flow in this embodiment of this application. For details, refer to the following descriptions. Details are not described herein.

At the transaction layer, a transaction queue, a transport queue lookup table, and transaction order control logic may be processed.

The transaction queue is used to store transactions from the application layer in order. The transaction in the transaction queue may also be referred to as a work queue element WQE. For example, in a UB transport and baseline transaction specification (Unified Bus Transport and Baseline Transaction Specification), the transaction queue may also be referred to as JFS, and the JFS is short for jetty for send. It may be understood that the transaction queue may alternatively have another name, and any transaction queue that has a function or feature that can be implemented by the transaction queue described in embodiments of this application belongs to the transaction queue described in embodiments of this application.

A transport queue is located at the transport layer, and is used to store transactions scheduled from the transaction queue. The transport queue lookup table includes a mapping relationship between a destination-end identifier of a transaction and a number of the transport queue. An identifier of the transport queue for sending the transaction may be found in the transport queue lookup table based on the destination-end identifier carried in the transaction (for example, a mark used to identify the transport queue, like the number of the transport queue, where the number is used as an example in embodiments of this application for description), so that the transaction may be scheduled from the transaction queue to the corresponding transport queue to wait for sending. Alternatively, in another possible implementation, the transaction may carry the identifier of the transport queue, so that the transport queue for sending the transaction can be determined without searching the transport queue lookup table. In subsequent descriptions in embodiments of this application, an example in which the transaction carries the destination-end identifier is used for description.

The transaction order control logic is mainly used to control a place order, a source completion order, and a destination completion order of the transactions in the transaction queue. For specific implementation, refer to subsequent descriptions. Details are not described herein.

At the transport layer, the transport queue may be processed according to a UB connectionless-oriented transport layer protocol, a communication connection may be established using a link setup module, and congestion control, multi-path transmission, and the like are performed. The link setup module is configured to create a transport queue, and transactions in a same transport queue are destined for a same destination, to ensure transaction transmission reliability. The congestion control may relieve congestion on a transmission path and improve transmission efficiency. A specific congestion control manner is not limited in embodiments of this application. In the multi-path transmission, transactions in a same transport queue may reach a destination through a plurality of paths, and a multi-path transmission module is responsible for path maintenance and load balancing.

The network layer is mainly used to determine an end-to-end route, and transmit a data packet between a source address and a destination address through a series of routers.

The data link layer is mainly used to forward a packet between devices at the network layer.

The physical layer is used to establish, maintain, and disconnect a physical connection. Hardware devices such as a network interface card, an Ethernet interface, and a network cable of a host all belong to the physical layer scope.

It may be understood that, the foregoing merely describes composition and implementable functions of the architecture of the communication protocol stack by using an example. In specific implementation, implementable functions are not limited to the foregoing descriptions, and more or fewer implementable functions may be further included, which are specifically determined based on an actual requirement. This is not limited in embodiments of this application.

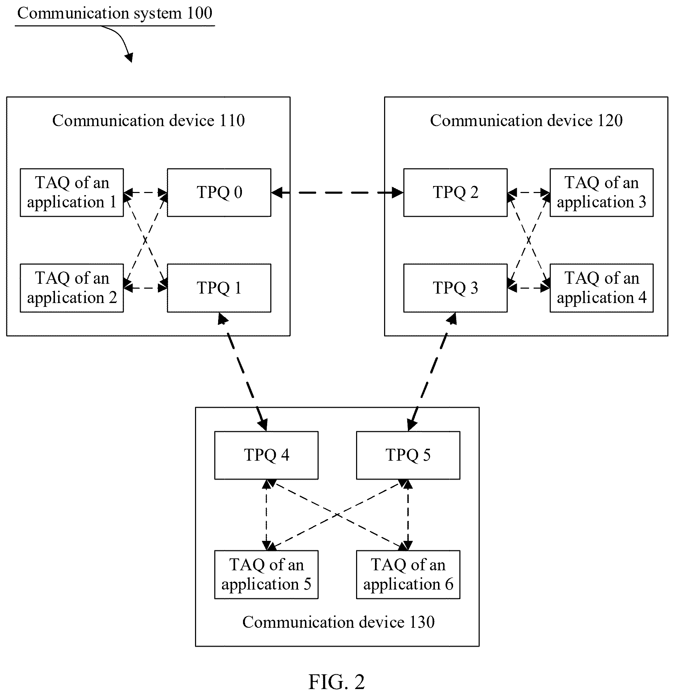

For example, refer to FIG. 2. FIG. 2 is a diagram of an architecture of a connectionless-oriented communication system 100. An example in which the communication system 100 includes a communication device 110, a communication device 120, and a communication device 130 is shown. For example, it is assumed that each of the three communication devices runs two applications, and correspondingly creates one local transaction queue TAQ for each application. For example, the communication device 110 runs an application 1 and an application 2, and separately creates TAQs corresponding to the application 1 and the application 2. The communication device 120 runs an application 3 and an application 4, and separately creates TAQs corresponding to the application 3 and the application 4. The communication device 130 runs an application 5 and an application 6, and separately creates TAQs corresponding to the application 5 and the application 6.

In addition, a group of transport queues TPQ (or a transport queue) is created between every two communication devices, and the TPQ ensures end-to-end transmission reliability. For example, the communication device 110 creates a TPQ 0 and the communication device 120 creates a TPQ 2, to implement transaction transmission between the two communication devices. The communication device 110 creates a TPQ 1 and the communication device 130 creates a TPQ 4, to implement transaction transmission between the two communication devices. The communication device 120 creates a TPQ 3 and the communication device 130 creates a TPQ 5, to implement transaction transmission between the two communication devices.

In specific implementation, based on destinations to which a WQE in a TAQ goes, the WQE in the TAQ is scheduled for different TPQs for transmission. A WQE in a TAQ in one communication device may go to any application process of any communication device in the other two communication devices. For ease of understanding, the following uses a TAQ of the application 1 in the communication device 110 as an example for description.

For example, a WQE in the TAQ of the application 1 may be transmitted to the communication device 120 via the TPQ 0 created in the communication device 110, or may be transmitted to the communication device 130 via the TPQ 1 created in the communication device 110. For example, if a WQE in the TAQ of the application 1 carries an identifier of the communication device 120, it indicates that a destination to which the WQE goes is the communication device 120. A number of a transport queue for sending the WQE is found in a transport queue lookup table based on the identifier of the communication device 120. As shown in FIG. 2, the number is 0. In this case, the WQE may be scheduled from the TAQ to the TPQ 0 for transmission. As shown in FIG. 2, the WQE is transmitted to the transport queue TPQ 2 of the communication device 120. The WQE is then performed by the communication device 120.

The communication device may be, for example, a server or any device having a computing or processing capability. A specific type of the communication device is not limited in embodiments of this application.

Communication between any two communication devices in the foregoing communication system 100 may be, for example, communication based on a remote direct memory access (remote direct memory access, RDMA) technology, communication based on an InfiniBand (InfiniBand, IB) technology, communication based on RDMA over converged Ethernet (RDMA over converged Ethernet, RoCE), communication based on Internet wide area RDMA protocol (Internet wide area RDMA protocol, iWARP), or communication based on transmission transactions such as high-speed serial computer extended bus standard (peripheral component interconnect express, PCIe) or UB-based communication.

It may be understood that the foregoing descriptions are merely examples, and do not constitute a limitation on embodiments of this application. In specific implementation, the communication system 100 may include two communication devices or more communication devices. In addition, applications running in the communication device are not limited to the two applications described above, and there may be one or more applications. This is not limited in embodiments of this application.

For example, refer to FIG. 3. FIG. 3 is a schematic flowchart of a transaction flow processing method according to an embodiment of this application. The method includes but is not limited to step S310 to step S330. The following describes a specific implementation process of each step by using an example.

S310: A first apparatus obtains a first transaction in a transaction set, where the transaction set includes a plurality of transactions sorted in ascending order of numbers, the first transaction includes a first place order flag, and the first place order flag is used to control a place order of the first transaction.

The first apparatus may be, for example, any communication device (referred to as a first communication device) in the communication system 100 shown in FIG. 2, or the first apparatus may be a network interface card (referred to as a first network interface card) or a processor in the first communication device or may be an apparatus obtained by combining the first network interface card and the processor.

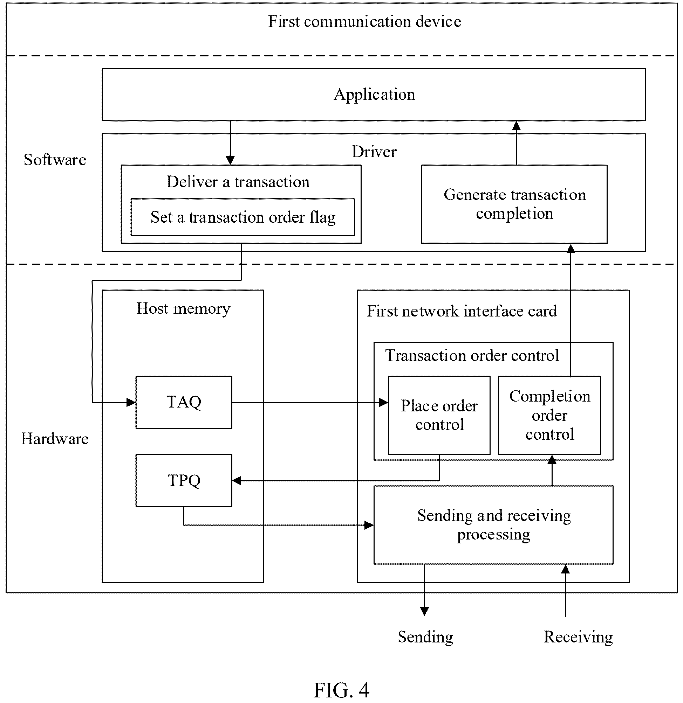

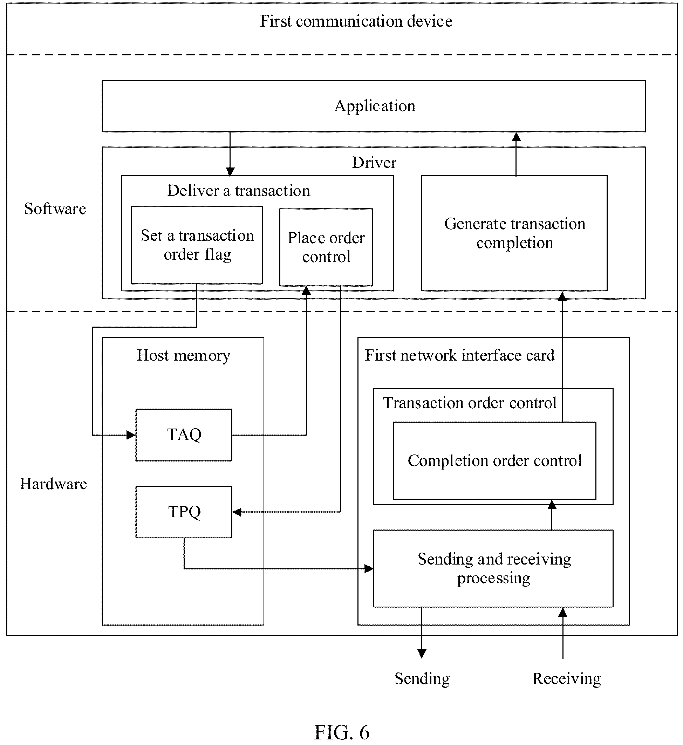

In specific implementation, the transaction set is located in a transaction queue. For ease of understanding, the following provides example descriptions with reference to FIG. 4. FIG. 4 is an example of a diagram of a structure of the first communication device. The first communication device includes a software part and a hardware part. The software part includes a specific application and driver. For example, the driver may be configured to implement a function of the API shown in FIG. 1, for example, set a transaction order flag in a transaction and deliver the transaction. For example, the driver may be further configured to implement another function. For example, refer to subsequent related descriptions in FIG. 6. Details are not described herein. The hardware part includes a host memory and the first network interface card. The software part is invoked and executed by the processor of the first communication device. Therefore, the software part is executed by the processor.

With reference to FIG. 4, in specific implementation, the application sends an application request to the driver based on a request of a user. The application request is used to request to initiate a transaction. The request carries a place order flag of the transaction. After receiving the application request, the driver constructs the transaction based on the application request, where the constructed transaction includes the place order flag. Then, the driver writes the transaction into a transaction queue TAQ. As shown in FIG. 4, the TAQ is located in the host memory. In addition to the transaction, the TAQ further includes one or more other transactions. These transactions are constructed and written into the TAQ by the driver based on a request from the application. These transactions also carry corresponding place order flags, which are specifically determined based on an application request. In addition, these transactions are arranged in the TAQ in a write order. For example, a sequence of transactions arranged in order in the TAQ is the foregoing transaction set. In this case, an order number of the transaction in the transaction set is the foregoing TAQ number.

In specific implementation, the transaction may include three types of place order flags, which are separately described below.

A first-type place order flag indicates that the transaction is a transaction that has no dependency relationship and has no order. If a transaction carries a first-type place order flag, it indicates that the transaction is neither a depending transaction nor a depended transaction, and has no order.

For example, in a UB transport and baseline transaction specification, the first-type place order flag may be represented by NO. NO is short for no order (no order). Alternatively, the first-type place order flag may also be referred to as an out-of-order execution flag. It may be understood that the representation of the first-type place order flag described herein is merely an example, and does not constitute any limitation on embodiments of this application. In specific implementation, the first-type place order flag may be represented by using another customized identifier. This is not limited in embodiments of this application.

A second-type place order flag indicates that the transaction is a depended transaction and has no order. If a transaction carries a second-type place order flag, it indicates that the transaction is a depended transaction, and has no order. However, a transaction depending on the transaction can be executed only after execution of the depended transaction is completed.

For example, in the UB transport and baseline transaction specification, the second-type place order flag may be represented by RO. RO is short for relaxed order (relaxed order). Alternatively, the second-type place order flag may also be referred to as a relaxed place order flag. It may be understood that the representation of the second-type place order flag described herein is merely an example, and does not constitute any limitation on embodiments of this application. In specific implementation, the second-type place order flag may be represented by using another customized identifier. This is not limited in embodiments of this application.

A third-type place order flag indicates that a transaction in the transaction set (for example, the foregoing TAQ) is executed after execution of a target transaction is completed, and execution of transactions, in the TAQ, and that are arranged after the transaction and that carry first-type and second-type place order flags is not blocked. The target transaction includes a transaction, in the TAQ, that is arranged before the transaction and that carries a preset flag. In other words, the target transaction includes a transaction, in the TAQ, that carries the preset flag and whose TAQ number is less than a TAQ number of the transaction. If a transaction (referred to as a transaction 1) carries a third-type place order flag, it indicates that the transaction 1 is a depending transaction, and a place order of the transaction 1 is constrained by whether execution of a transaction on which the transaction 1 depends is completed. In other words, the transaction 1 can be scheduled and executed only after execution of the transaction on which the transaction 1 depends is completed, to ensure correct processing logic of the transaction. In addition, if transactions, in the TAQ, that are arranged after the transaction 1 includes transactions (referred to as transactions 2) carrying a first-type place order flag and/or a second-type place order flag, in a process in which the transaction 1 waits for completion of execution of the transactions on which the transaction 1 depends, the transactions 2 may be scheduled first.

For example, in the UB transport and baseline transaction specification, the third-type place order flag may be represented by SO. SO is short for strong order (strong order). Alternatively, the third-type place order flag may also be referred to as a strong place order flag. It may be understood that the representation of the third-type place order flag described herein is merely an example, and does not constitute any limitation on embodiments of this application. In specific implementation, the third-type place order flag may be represented by using another customized identifier. This is not limited in embodiments of this application.

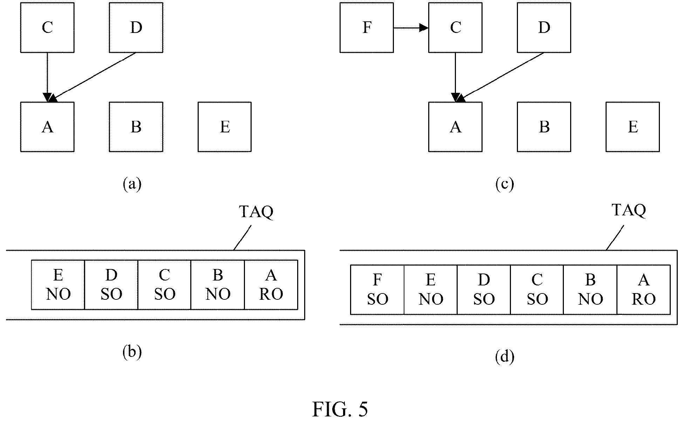

In this embodiment of this application, whether execution of the transaction on which the transaction 1 depends is completed is determined by determining whether execution of the transaction that carries the preset flag is completed. For example, the preset flag includes the second-type place order flag, and optionally, may further include the third-type place order flag. For ease of understanding, for example, refer to FIG. 5.

(a) in FIG. 5 shows an example of a dependency relationship between five transactions A, B, C, D, and E. Specifically, the transactions C and D depend on the transaction A, in other words, the transactions C and D can be executed only after execution of the transaction A is completed, and there is no other dependency relationship. In this case, the transaction A is a depended transaction, and a user may set a place order flag of the transaction A to a second-type place order flag, for example, RO. The transactions C and D are depending transactions, and place order flags of the transactions C and D may be set to third-type place order flags, for example, SO. The transactions B and E have no dependency relationship, and place order flags of the transactions B and E may be set to first-type place order flags, for example, NO. Then, the five transactions A, B, C, D, and E are sequentially delivered to a same TAQ, as shown in (b) in FIG. 5. In this case, the transactions A and B may be directly scheduled, and the transaction C can be scheduled only after execution of the transaction A is completed. Similarly, the transaction D can be scheduled only after execution of the transactions A and C is completed. The transaction E may be directly scheduled without waiting for completion of another transaction. A final effect is to ensure that a place order of the transactions A, C, and D is that the transaction A is executed first, then the transaction C is executed, then the transaction D is executed, and the transactions B and E may be executed in an out-of-order manner. It can be learned that the transactions C and D that carry SO flags can be scheduled only after execution of all transactions, in the TAQ, that are arranged before the transactions C and D and that carry an RO flag and an SO flag is completed, and can be sent to a destination for execution only after being scheduled. In addition, in a process in which the transactions C and D wait for completion of execution of the transaction A, the transaction E may be scheduled first, so that execution of the transaction E is not blocked.

In a possible implementation, if a transaction is both a depending transaction and a depended transaction, the transaction may be considered as a depending transaction to set a place order flag. In other words, the place order flag of the transaction is set to a third-type place order flag. For example, in (c) in FIG. 5, if a transaction F is further included, the transaction F depends on the transaction C, and is written into the TAQ after the transaction E, as shown in (d) in FIG. 5. In this case, the transaction C is both a depending transaction (depending on the transaction A) and a depended transaction (on which the transaction F depends). To ensure a place order of the transaction C, a place order flag of the transaction C is set as a depending transaction, and the place order flag of the transaction C is still set to SO. The transaction F is also a depending transaction, and a place order flag of the transaction F is set to SO. In this case, the transaction F can be scheduled only after execution of transactions (namely, the transaction A, the transaction C, and the transaction D), in the TAQ, that are arranged before the transaction F and that carry the flags RO and SO is completed.

It can be learned from the examples in FIG. 5 that the place order flag set in this embodiment can simply approximate a complex dependency relationship between transactions, to ensure that a place order of the transaction does not violate the dependency relationship. In addition, execution of a transaction that has no dependency relationship is not affected, thereby effectively improving transaction processing efficiency.

In a possible implementation, the place order flag of the transaction may further include a reserved (reserved, Rvs) order flag. The reserved order flag is a reserved field, and is used to improve compatibility. For example, in the foregoing UB transport and baseline transaction specification, the reserved order flag may be represented by the RSV. It may be understood that this is merely an example herein, and does not constitute any limitation on embodiments of this application. In specific implementation, the reserved order flag may be represented by using another customized identifier. This is not limited in embodiments of this application.

In specific implementation, the TAQ has a corresponding transaction queue context (transaction queue context, TAQC). In a possible implementation, after writing a transaction into the TAQ, the driver correspondingly updates the transaction queue context. Specifically, a place order flag carried in the transaction may be added to the transaction queue context, to facilitate subsequent processing. For details, refer to the following descriptions. Details are not described herein.

In a possible implementation, after writing a transaction into the TAQ, the driver notifies the first network interface card of scheduling the transaction in the TAQ. Alternatively, in another possible implementation, for example, as shown in FIG. 6, after writing a transaction into the TAQ, the driver may schedule the transaction in the TAQ, to be specific, the processor schedules the transaction in the TAQ. The first network interface card and the processor are collectively referred to as the foregoing first apparatus. In this case, the first apparatus may obtain a transaction from the TAQ. For example, the obtained transaction is the first transaction. A place order flag carried in the first transaction is the first place order flag. Optionally, the first transaction may be a transaction in any location in the TAQ. If a transaction is obtained from the TAQ for the first time, the obtained transaction is a transaction at the head of the TAQ.

S320: The first apparatus sends the first transaction to a second apparatus based on an indication of the first place order flag.

After obtaining the first transaction, the first apparatus may determine, based on the indication of the first place order flag in the first transaction, whether the first transaction may be scheduled to a transport queue. The following provides example descriptions.

In a possible implementation, if the first place order flag is the first-type place order flag or the reserved order flag, the first transaction may be directly scheduled. For example, it can be learned from the foregoing descriptions of the transaction layer in FIG. 1 that the transport queue lookup table is set at the transaction layer, and the transport queue lookup table may be stored, for example, in the host memory. The transport queue lookup table includes the mapping relationship between the destination-end identifier of the transaction and the number of the transport queue. Therefore, the corresponding transport queue may be found in the transport queue lookup table based on the destination-end identifier carried in the first transaction. Then, the first transaction is scheduled to the transport queue. For ease of understanding, for example, refer to FIG. 4 or FIG. 6. The first network interface card or the processor obtains the first transaction from the TAQ (through the driver). It is determined, through place order control determining, that the first place order flag is the first-type place order flag or the reserved order flag. Further, it is determined that the first transaction may be scheduled, and the first transaction is scheduled to the TPQ. Then, the first network interface card obtains the first transaction from the TPQ, encapsulates the first transaction into a transaction message, and sends the transaction message to a destination, in other words, sends the transaction message to the second apparatus.

In a possible implementation, the transaction message may include one or more packets. For example, in another possible implementation, the packet included in the transaction message may also be referred to as a packet (packet). If the transaction message includes a plurality of packets, the first network interface card may split and encapsulate the first transaction into a plurality of packets for sending.

The second apparatus may be, for example, any communication device (referred to as a second communication device) other than the first communication device in the communication system 100 shown in FIG. 2, or the second apparatus may be a network interface card (referred to as a second network interface card) in the second communication device or may be an apparatus obtained by combining the second network interface card and a processor.

In a possible implementation, if the first place order flag is the second-type place order flag, the first transaction may also be directly scheduled. For specific scheduling and sending, refer to related descriptions in a case in which the first place order flag is the first-type place order flag or the reserved order flag. Details are not described herein again. In addition, it can be learned from the foregoing descriptions that the second-type place order flag indicates that the first transaction is a depended transaction. Subsequently, another transaction depending on the first transaction can be scheduled only after execution of the first transaction is completed. Therefore, the first transaction may be first marked as a depended transaction whose execution is not completed. Therefore, before execution of the first transaction is completed, scheduling of the another transaction depending on the first transaction may be suspended based on the mark.

In a possible implementation, a transaction may be marked, by using a bitmap, as a depended transaction whose execution is not completed. For example, a bitmap (referred to as a first bitmap) may be set, and each transaction in the TAQ corresponds to one bit in the first bitmap. A value of each bit is 0 by default. When a transaction needs to be marked as a depended transaction whose execution is not completed, a bit corresponding to the transaction may be set to 1. For example, a bit corresponding to the first transaction may be set to 1. It may be understood that this is merely an example herein, and does not constitute any limitation on embodiments of this application. Alternatively, in another possible implementation, values of bits in the first bitmap are 1 by default. When a transaction needs to be marked as a depended transaction whose execution is not completed, a bit corresponding to the transaction may be set to 0. Alternatively, the default value is not limited to 0 or 1, and may be another value, for example, 2 or 3. A value used for marking is not limited to 0 or 1, and similarly, may be another value. Specifically, a default value may be selected based on an actual requirement. If the value used for marking is the another value, a transaction may be correspondingly marked by using two or more bits. This is not limited in embodiments of this application. The same applies to a value in a bitmap subsequently. Details are not described.

In a possible implementation, in the first bitmap, after a transaction is marked as a depended transaction whose execution is not completed (for example, marked as 1), if execution of the transaction is completed, a bit corresponding to the transaction in the first bitmap may be restored to a default value (for example, restored to 0), or marked as a preset value (the preset value is set based on actual application, and is not limited in embodiments of this application). The same applies to a subsequent bitmap. If a condition for marking a transaction is not met, the transaction is unmarked in the bitmap. For details, for example, refer to the descriptions of the first bitmap. Details are not described again subsequently.

In another possible implementation, a transaction may be marked, in a list manner, as a depended transaction whose execution is not completed. For example, a list (referred to as a first list) may be set, and the first list may be used to store an index of a depended transaction that has been scheduled but whose execution has not been completed in the TAQ. The index may be, for example, an order number of the transaction in the TAQ, or may be other information that may be used to identify the transaction. This is not limited in embodiments of this application. When a transaction needs to be marked as a depended transaction whose execution is not completed, an index of the transaction may be added to the list. For example, an index of the first transaction may be added to the list. It may be understood that this is merely an example herein, and does not constitute any limitation on embodiments of this application.

In a possible implementation, after an index of a transaction is added to the first list, if execution of the transaction is completed, the index of the transaction may be deleted from the first list. The same applies to each subsequent list. If a condition for marking a transaction is not met, the transaction is unmarked in the list. For details, for example, refer to the descriptions of the first list. Details are not described subsequently.

The foregoing manner of marking the depended transaction whose execution is not completed is merely an example, and does not constitute any limitation on embodiments of this application.

In a possible implementation, if the first place order flag is the third-type place order flag, the first apparatus determines, based on an indication of the third-type place order flag, whether the first transaction can be scheduled. Based on the foregoing descriptions of the third-type place order flag, it can be learned that the third-type place order flag indicates that the first transaction is a depending transaction, and execution of transactions (referred to as first target transactions), in the TAQ, that are arranged before the first transaction and that carry the preset flags (for example, the RO and SO flags) needs to be completed first.

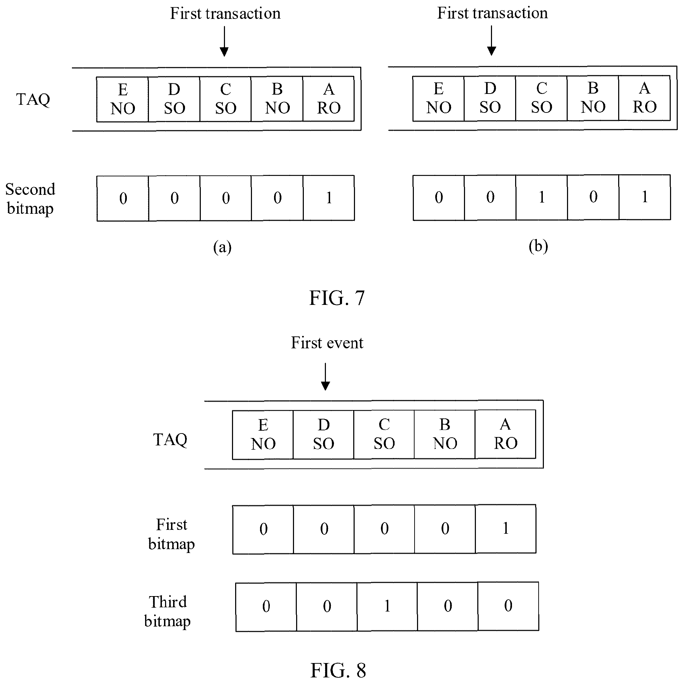

For example, in a possible implementation, the first apparatus may mark, by using a bitmap, a noncompletion status of the transaction that carries the preset flag. For example, a bitmap (referred to as a second bitmap) may be set, and each transaction in the TAQ corresponds to one bit in the second bitmap. An initial value of each bit is 0 by default. When the transaction that carries the preset flag is scheduled but execution is not completed, or scheduling of the transaction is suspended, the transaction needs to be marked as a transaction whose execution is not completed. A bit corresponding to the transaction in the second bitmap may be set to 1. For ease of understanding, for example, refer to FIG. 7.

In (a) in FIG. 7, transactions included in the TAQ and place order flags carried in the transactions are shown in the figure. It is assumed that the first transaction is a transaction C in the TAQ, a transaction A (that carries an RO flag) that is arranged before the transaction C and that carries the preset flag exists, and execution of the transaction A is not completed. Therefore, a bit corresponding to the transaction A in the second bitmap is set to 1. Other bits in the second bitmap are set to 0. Alternatively, refer to (b) in FIG. 7. It is assumed that the first transaction is a transaction D in the TAQ, transactions that are arranged before the transaction D and that carry the preset flags include a transaction A (that carries an RO flag) and a transaction C (that carries an SO flag), and execution of the transaction A and the transaction C is not completed. Therefore, bits corresponding to the transaction A and the transaction C in the second bitmap are set to 1. Other bits in the second bitmap are set to 0. It may be understood that this is merely an example herein, and does not constitute any limitation on embodiments of this application.

For example, in another possible implementation, a bitmap (referred to as a third bitmap) may be set to be used together with the first bitmap to mark the noncompletion status of the transaction that carries the preset flag. Specifically, based on the foregoing descriptions, the first bitmap is used to mark a depended transaction whose execution is not completed, to be specific, mark a transaction whose execution is not completed and that carries a second-type place order flag (for example, an RO flag). In this case, in the third bitmap, only a transaction whose execution is not completed and that carries a third-type place order flag (for example, an SO flag) needs to be marked. For ease of understanding, for example, refer to FIG. 8.

In FIG. 8, it is assumed that the first transaction is a transaction D in the TAQ, transactions that are arranged before the transaction D and that carry the preset flags include a transaction A (that carries an RO flag) and a transaction C (that carries an SO flag), and execution of the transaction A and the transaction C is not completed. In this case, a bit corresponding to the transaction A in the first bitmap is set to 1, and other bits are set to 0; and a bit corresponding to the transaction C in the third bitmap is set to 1, and other bits are set to 0. It may be understood that this is merely an example herein, and does not constitute any limitation on embodiments of this application.

In another possible implementation, the noncompletion status of the transaction that carries the preset flag may be marked in a list manner. A list (referred to as a second list) may be set, and the second list may be used to store an index of a transaction that carries the preset flag and whose execution is not completed. The index may be, for example, an order number of the transaction in the TAQ, or may be other information that may be used to identify the transaction. This is not limited in embodiments of this application. When the transaction that carries the preset flag is scheduled but execution is not completed, or scheduling of the transaction is suspended, the transaction needs to be marked as a transaction whose execution is not completed. An index of the transaction may be added to the list. It may be understood that this is merely an example herein, and does not constitute any limitation on embodiments of this application.

Alternatively, in another possible implementation, a list (referred to as a third list) may be set to be used together with the first list to mark the noncompletion status of the transaction that carries the preset flag. For specific cooperative use, refer to the foregoing descriptions of cooperative use of the first bitmap and the third bitmap. Details are not described herein again.

Based on the foregoing descriptions, the first apparatus may obtain a mark in the second bitmap, or obtain a mark in the third bitmap and a mark in the first bitmap, or obtain the transaction index in the second list, or obtain the transaction index in the third list and the transaction index in the first list based on the indication of the third-type place order flag in the first transaction, to determine whether execution of all the first target transactions has been completed.

In a possible implementation, the obtained mark in the bitmap or a transaction index of the obtained list indicates that execution of not all the first target transactions is completed. In this case, the first apparatus suspends scheduling of the first transaction. For example, the mark in the second bitmap is obtained. For example, refer to (b) in FIG. 7. It is assumed that the first transaction is the transaction D in the TAQ. In this case, the first target transactions include the transaction A that carries the RO flag and the transaction C that carries the SO flag. In the second bitmap, the bits corresponding to the transaction A and the transaction C are 1, to indicate that execution is not completed. In this case, the first apparatus cannot schedule the transaction D, and needs to wait for completion of execution of the transaction A and the transaction C. For another example, a case in which the transaction index in the second list is obtained is used as an example. If the second list includes indexes of a part or all of the first target transactions, it indicates that execution of not all the first target transactions is completed, waiting needs to be performed and scheduling of the first transaction needs to be suspended. In addition, whether execution of all the first target transactions has been completed is determined by obtaining the mark in the third bitmap and the mark in the first bitmap or by obtaining the transaction index in the third list and the transaction index in the first list. Details are not described again.

For example, after the first apparatus determines to suspend scheduling of the first transaction, the first transaction becomes a transaction whose execution is not completed and that carries a third-type place order flag, and the transaction may be marked. For example, the bit corresponding to the first transaction in the second bitmap is set to 1. Alternatively, for example, the index of the first transaction is added to the second list.

Although the first apparatus suspends scheduling of the first transaction, the first apparatus may continue to obtain a transaction (referred to as a second transaction), in the TAQ, that is arranged after the first transaction for processing. In specific implementation, after obtaining the second transaction, the first apparatus needs to obtain a place order flag in the second transaction to determine whether the second transaction can be scheduled. For specific implementation, refer to the descriptions of the first transaction. Details are not described herein again. For ease of understanding, (b) in FIG. 7 is still used as an example. After scheduling of the transaction D is suspended, the first apparatus may obtain a transaction E that is arranged after the transaction D, and determine whether the transaction E can be scheduled. Similarly, a place order flag carried in the transaction E is obtained, and is an NO flag in the figure. In this case, it indicates that the transaction E is a transaction that has no dependency relationship, and may be directly scheduled to the transport queue for sending.

In another possible implementation, if the place order flag carried in the transaction E in (b) in FIG. 7 is an RO flag, the transaction E may also be directly scheduled, but the transaction E needs to be marked as a depended transaction whose execution is not completed. For specific implementation, refer to the descriptions of the case in which the first place order flag carried in the first transaction is the second-type place order flag. Details are not described herein again.

In another possible implementation, if the place order flag carried in the transaction E in (b) in FIG. 7 is an SO flag, whether the transaction E can be scheduled needs to be determined based on an indication of the SO flag. For specific implementation, refer to the descriptions of the case in which the first place order flag carried in the first transaction is the third-type place order flag. Details are not described herein again.

In addition, after determining to suspend scheduling of the first transaction, the first apparatus may mark the first transaction as a transaction to be scheduled. In this way, scheduling can be quickly implemented when a condition for scheduling the first transaction is subsequently met. For example, a bitmap (referred to as a fourth bitmap) may be set for marking. One transaction in the TAQ corresponds to one bit in the fourth bitmap. A value of each bit is 0 by default. When a transaction needs to be marked as a transaction to be scheduled, a bit corresponding to the transaction may be set to 1. Alternatively, a list manner may be used for marking. For example, a list (referred to as a fourth list) may be set, and the fourth list may be used to store an index of a transaction to be scheduled. The index may be, for example, an order number of the transaction in the TAQ, or may be other information that may be used to identify the transaction. This is not limited in embodiments of this application. When a transaction needs to be marked as a transaction to be scheduled, an index of the transaction may be added to the list. It may be understood that this is merely an example herein, and does not constitute any limitation on embodiments of this application.

In another possible implementation, if the obtained mark in the bitmap or a transaction index of the obtained list indicates that execution of all the first target transactions is completed, the first apparatus schedules the first transaction to the transport queue to wait for sending. For example, the mark in the second bitmap is obtained. If all bits corresponding to the first target transactions in the second bitmap are 0, it indicates that execution of all the first target transactions has been completed. In this case, the first apparatus schedules the first transaction. For another example, a case in which the transaction index in the second list is obtained is used as an example. If the second list does not include an index of any one of the first target transactions, it indicates that execution of all the first target transactions is completed, and the first transaction may be scheduled. In addition, whether execution of all the first target transactions has been completed is determined by obtaining the mark in the third bitmap and the mark in the first bitmap or by obtaining the transaction index in the third list and the transaction index in the first list. Details are not described again.

In a possible implementation, the bitmap or the list described in the foregoing example may be stored in the transaction queue context of the TAQ, or may be stored in preset storage space. This is not limited in embodiments of this application.

Based on the foregoing descriptions, when determining, based on the indication of the first place order flag, that the first transaction can be scheduled, the first apparatus may schedule the first transaction to the transport queue. Then, the first network interface card obtains the first transaction from the transport queue, encapsulates the first transaction into the transaction message, and sends the transaction message to the second apparatus.

S330: The second apparatus receives the first transaction, and executes the first transaction.

In specific implementation, the second apparatus receives the transaction message, obtains the first transaction after parsing the transaction message, and correspondingly executes the first transaction.

For example, the second network interface card is the second network interface card in the second communication device. After receiving the transaction message, the second network interface card first performs processing at a transport layer. For example, the packet included in the transaction message is written into a corresponding memory, a receiving bitmap of a local transport queue is updated, and a transport layer acknowledge character (acknowledge character, ACK) is sent to the first network interface card. The transport layer ACK is used to notify the first network interface card that the packet in the transaction message has been received. Then, after execution of the first transaction is completed, the second network interface card starts a transaction layer processing procedure, for example, sends a transaction layer ACK to the first network interface card, to notify the first network interface card that execution of the first transaction has been completed. For example, the transaction layer ACK carries an identifier of the first transaction, and the identifier may be, for example, an order number (namely, a TAQ number) of the first transaction in the transaction queue TAQ. For example, the TAQ number of the first transaction may be carried in the transaction message and the transaction message is sent to the second network interface card.

In a possible implementation, after receiving the transaction layer ACK from the second network interface card, the first network interface card may determine, based on the transaction layer ACK, whether to trigger reprocessing of a previous transaction whose scheduling is suspended. Alternatively, the first network interface card notifies, based on the transaction layer ACK, the processor in the first communication device that execution of the first transaction has been completed, and then the processor (through the foregoing driver) determines whether to trigger reprocessing of a previous transaction whose scheduling is suspended.

For example, it can be learned from the descriptions in step S310 that the TAQ has the corresponding transaction queue context, and the context records a place order flag of each transaction in the TAQ. In specific implementation, the first apparatus (that is, the first network interface card or the processor in the first communication device) may obtain the identifier of the first transaction in the transaction layer ACK. The first place order flag of the first transaction may be obtained from the transaction queue context of the TAQ corresponding to the first transaction based on the identifier.

For example, if the first place order flag is the first-type place order flag or the reserved order flag, it indicates that the first transaction has no dependency relationship, and whether to trigger reprocessing of a transaction whose scheduling is suspended does not need to be considered.

For example, if the first place order flag is the second-type place order flag or the third-type place order flag, it indicates that the first transaction has a dependency relationship, and whether to trigger reprocessing of the transaction whose scheduling is suspended needs to be considered. For example, it can be learned from the foregoing descriptions that the transaction whose scheduling is suspended has been marked in advance, for example, marked by using the fourth bitmap or the fourth list. In this case, whether there is the transaction whose scheduling is suspended may be determined based on the fourth bitmap or the fourth list.

If it is determined that there is no transaction whose scheduling is suspended, the first apparatus continues to schedule a transaction in the TAQ. If it is determined that there is the transaction whose scheduling is suspended, it is further determined whether the transaction whose scheduling is suspended can be rescheduled. For example, for ease of understanding, the foregoing second bitmap is used as an example for description.

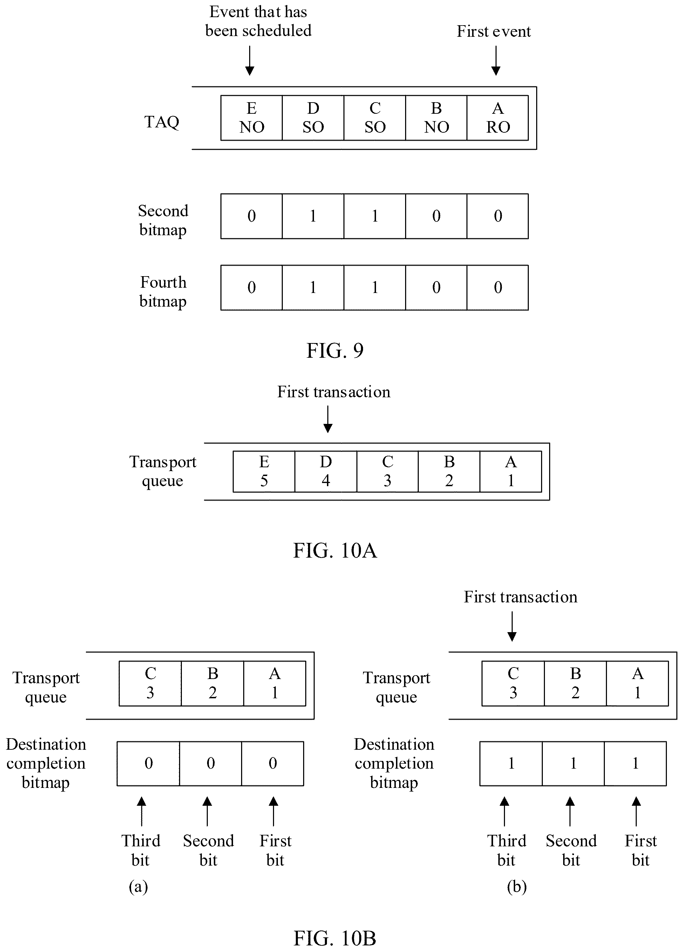

The noncompletion status of transactions that carry the preset flags (for example, the second-type place order flag RO and the third-type place order flag SO) is marked in the second bitmap. If the first apparatus learns, based on the received transaction layer ACK, that execution of the first transaction has been completed, the first apparatus may remove the mark indicating that execution of the first transaction is not completed in the second bitmap. For example, the bit corresponding to the first transaction is changed from 1 to 0. Then, the second bitmap is searched to determine whether execution of all transactions that are arranged before the transaction whose scheduling is suspended and that carry the preset flags is completed. In other words, it is determined whether bits corresponding to the transactions that are arranged before the transaction whose scheduling is suspended and that carry the preset flags in the second bitmap are all 0. If the bits corresponding to the transactions that are arranged before the transaction whose scheduling is suspended and that carry the preset flags in the second bitmap are all 0, the transaction whose scheduling is suspended may be rescheduled. If the bits corresponding to the transactions that are arranged before the transaction whose scheduling is suspended and that carry the preset flags in the second bitmap are not 0, the transaction whose scheduling is suspended cannot be rescheduled. For example, a trigger determining of a next transaction layer ACK may be waited for. For ease of understanding, for example, refer to FIG. 9.

In FIG. 9, it is assumed that a transaction A in the TAQ is the first transaction. In addition, it is assumed that in the TAQ, the first apparatus receives a transaction layer ACK of the transaction A when the first apparatus has scheduled a transaction E, so as to learn that execution of the transaction A is completed. Execution of the transaction A has been completed. Therefore, a bit corresponding to the transaction A in the second bitmap changes to 0. Execution of the transaction A is not completed before the transaction E is scheduled. Therefore, bits corresponding to the transactions C and D in the second bitmap are set to 1, to indicate that the transactions C and D are transactions whose execution is not completed and that carry the preset flags. In addition, bits corresponding to the transactions C and D in the fourth bitmap are set to 1, to indicate that the transactions C and D are transactions whose scheduling is suspended. After receiving the transaction layer ACK of the transaction A, the first apparatus learns that execution of the transaction A is completed, and the first apparatus determines, in the fourth bitmap, that the transaction C and the transaction D are the transactions whose scheduling is suspended. First, it is determined whether the transaction C can be scheduled. If it is found in the second bitmap that all bits corresponding to transactions that are arranged before the transaction C are 0, it indicates that execution of all transactions that are arranged before the transaction C and that carry the preset flags has been completed. In this case, the transaction C can be scheduled. Then, a bit corresponding to the transaction C in the fourth bitmap changes to 0, to indicate that the transaction C has been scheduled.

In a possible implementation, after the transaction C is scheduled, a next transaction layer ACK may continue to be waited for to trigger determining whether the transaction D can be scheduled. Alternatively, after the transaction C is scheduled, whether the transaction D can be scheduled may continue to be determined. Apparently, because execution of the transaction C is not completed, the transaction D cannot be scheduled. Therefore, the next transaction layer ACK may continue to be waited for to trigger determining whether the transaction D can be scheduled. It may be understood that this is merely an example herein, and does not constitute any limitation on embodiments of this application.

In addition, in the foregoing description of determining whether the transaction whose scheduling is suspended can be rescheduled, the second bitmap is mainly used as an example for description. In another possible implementation, determining may alternatively be performed based on the second list, or based on information about the third list and the first list. Details are not described herein.

In a possible implementation, after receiving a transaction layer ACK of the first transaction, the first network interface card may update a source completion bitmap corresponding to the TAQ in which the first transaction is located. The source completion bitmap is used to mark a completion status of a transaction in the TAQ, so that a CQE is generated to notify an upper-layer application. For example, one transaction in the TAQ corresponds to one bit of the source completion bitmap. A value of each bit is 0 by default. After a transaction layer ACK of a transaction is received, a bit corresponding to the transaction may be set to 1, to indicate that execution of the transaction has been completed. In this case, after the transaction layer ACK of the first transaction is received, the bit corresponding to the first transaction may be set to 1. It may be understood that this is merely an example herein, and does not constitute any limitation on embodiments of this application.

For example, after the bit corresponding to the first transaction in the source completion bitmap is set to 1, it may be determined whether execution of all transactions, in the TAQ, that are arranged before the first transaction has been completed. For example, if bits corresponding to the transactions that are arranged before the first transaction in the source completion bitmap are all set to 1, it indicates that execution of all these transactions has been completed. Then, when it is determined whether execution of all the transactions, in the TAQ, that are arranged before the first transaction has been completed, CQEs corresponding to the transactions are sequentially generated in an arrangement order of these transactions whose execution has been completed in the TAQ. For example, as shown in FIG. 4 or FIG. 6, after generating the CQEs, the first network interface card sequentially sends the CQEs to an upper-layer driver in a generation order. The driver generates a corresponding completion event to notify an upper-layer application. In this implementation, a source generates completion information of transactions in order, so that existing semantics can be compatible, and an application does not need to be modified. This improves applicability of this solution.

For example, after sequentially generating the CQEs, the first network interface card first sequentially stores the CQEs in a completion queue in the generation order. Then, the CQEs are obtained from the completion queue in a "first in first out" order and sent to the upper-layer driver. In the UB transport and baseline transaction specification, the completion queue may also be referred to as a completion container (jetty for completion, JFC). It may be understood that the completion queue may alternatively have another name. Any function or feature that can be implemented by the completion queue described in embodiments of this application belongs to the completion queue described in embodiments of this application.

In a possible implementation, in step S330, in addition to the first transaction, the transaction message received by the second network interface card may further include a completion order flag of the first transaction. The completion order flag is used to control an order in which the second network interface card generates completion information of the first transaction after execution of the first transaction is completed. For example, the completion information may be a CQE. The following provides example descriptions.

In specific implementation, in addition to the first place order flag, an application request that is sent by the application to the driver and that is used to request to initiate the first transaction further includes the completion order flag (referred to as a first completion order flag) of the first transaction. Then, when constructing the first transaction based on the application request, the driver adds the first completion order flag to the constructed first transaction. In other words, the first transaction carries the first completion order flag.

In specific implementation, the first transaction may include two types of completion order flags, which are separately described below.

A first-type completion order flag indicates that there is no constraint on a generation order of the completion information of the first transaction in the second network interface card, in other words, there has no order-preserving requirement. After execution of the first transaction is completed, the second network interface card may generate the CQE of the first transaction without waiting. For example, in the UB transport and baseline transaction specification, the first-type completion order flag may also be represented by NO, and is referred to as an out-of-order completion flag.

A second-type completion order flag indicates that the completion information of the first transaction is generated after completion information of a second target transaction is generated. In other words, there is an order-preserving requirement for a completion order of the first transaction. The second target transaction includes a transaction (or a transaction whose TP message sequence number (TP message sequence number, TPMSN) is less than a TPMSN of the first transaction) that is in the transport queue to which the first transaction is scheduled and that is arranged before the first transaction. For example, in the UB transport and baseline transaction specification, the second-type completion order flag may be represented by CO. CO is short for completion order (Completion Order), and may also be referred to as an order-preserving completion flag.

For example, it can be learned from the foregoing descriptions that a transaction in the transaction queue needs to be scheduled to the transport queue for sending. Transactions in a same transport queue are sent to a same destination. A sequence (sequence) number is re-assigned to a transaction scheduled to the transport queue, and the sequence number is used to identify an order of the transaction in the transport queue. For example, the sequence number is the TPMSN. That is, after being scheduled to the transport queue, transactions are arranged in ascending order of TPMSNs. A TPMSN of a transaction that enters the transport queue first is smaller than a TPMSN of a transaction that enters the transport queue later.

For ease of understanding, for example, refer to FIG. 10A. It is assumed that the transport queue includes a transaction A, a transaction B, a transaction C, a transaction D, and a transaction E, and destinations of these transactions are the second network interface card. TPMSNs of the transaction A, the transaction B, the transaction C, the transaction D, and the transaction E are 1, 2, 3, 4, and 5, respectively. If the transaction D in the transport queue is the first transaction, and the first transaction carries the second-type completion order flag, it indicates that the second network interface card generates completion information of the transaction D after generating completion information of the transaction A, the transaction B, and the transaction C.

In a possible implementation, transactions scheduled to a same transport queue may be from one or more transaction queues. An example in which the transactions scheduled to the same transport queue are from a plurality of transaction queues is used. For example, the plurality of transaction queues are generated in the first communication device. Transactions in the plurality of transaction queues may be from a same application, or may be from different applications. This is not limited in embodiments of this application. In addition, the plurality of transaction queues include transactions with a same destination. For example, all the transactions need to be sent to the second network interface card. In this case, the first apparatus may schedule, to a same transport queue, a transaction that is in the plurality of transaction queues and whose destination is the second network interface card.

The foregoing describes related content of the completion order flag by using an example. The following continues to describe an implementation process in which the second network interface card generates completion information of a transaction based on an indication of the completion order flag.

After constructing the first transaction, the driver delivers the first transaction to the transaction queue. Then, after scheduling the first transaction to the transport queue, the first network interface card obtains the first transaction from the transport queue, and encapsulates the first transaction into the foregoing transaction message. In addition, in an encapsulation process, the first completion order flag is added to a transaction header (transaction header, TAH) of the packet included in the transaction message. After encapsulation is completed, the transaction message is sent to the second network interface card. For example, if the transaction message includes a plurality of packets, the first completion order flag may be added to a transaction header of each of the plurality of packets. Alternatively, the first completion order flag may be added to a transaction header of each of a part of the plurality of packets. That the first completion order flag is added to a transaction header of each of specific packets may be determined based on an actual requirement. This is not limited in embodiments of this application.

After receiving the transaction message, the second network interface card parses the transaction message to obtain the first transaction and the first completion order flag in a transaction header. Then, in addition to the operation processed by the second network interface card and described above, the second network interface card further determines a generation manner of the CQE of the first transaction based on an indication of the first completion order flag in the transaction header of the transaction message.

In specific implementation, if the second network interface card does not consume a receive work queue element (Receive WQE) in a local transaction queue (referred to as a receive end transaction queue) in a process of receiving the transaction message, after execution of the first transaction is completed, the transaction layer ACK may be generated and sent to the first network interface card without generating the CQE of the transaction. For example, in the UB transport and baseline transaction specification, the receive end transaction queue may also be referred to as JFR, and the JFR is short for jetty for receive. It may be understood that the receive end transaction queue may alternatively have another name. Any function or feature that can be implemented by the receive end transaction queue described in embodiments of this application belongs to the receive end transaction queue described in embodiments of this application.

If the second network interface card consumes the receive WQE in the receive end transaction queue in the process of receiving the transaction message, after execution of the first transaction is completed, the second network interface card needs to generate the CQE to notify an upper-layer application of the second network interface card. For example, if the transaction message is a transaction message generated based on a SEND operation transaction or a WRITE_WITH_IMM operation transaction initiated by a user, the second network interface card consumes the receive WQE in the local transaction queue after receiving the transaction message. Consuming the receive WQE means writing a payload (payload) in the packet included in the transaction message into an address to which the receive WQE points. Therefore, one receive WQE is not consumed until payloads of all packets included in the transaction message are written into the address to which the receive WQE points. Receive WQEs in the receive end transaction queue are also arranged in order, but there is no correspondence between the receive WQE and a received transaction. No matter which transaction that needs to consume the receive WQE is received, a receive WQE arranged first may be obtained from the receive end transaction queue for consumption. After being consumed, the receive WQE is removed from the receive end transaction queue.

In a possible implementation, if the first completion order flag is the first-type completion order flag, after finishing executing the first transaction, the second network interface card may generate the CQE of the first transaction without waiting.

In a possible implementation, if the first completion order flag is the second-type completion order flag, after finishing executing the first transaction, the second network interface card determines, based on an indication of the first-type completion order flag, an occasion for generating the CQE. The following provides example descriptions.

In a possible implementation, the second network interface card sets a destination completion bitmap, to mark a completion status of a transaction from the first network interface card. Regardless of whether a received transaction consumes the Receive WQE in the receive end transaction queue, the transaction is marked in the destination completion bitmap.

The first transaction is used as an example. The transaction message that is sent by the first network interface card to the second network interface card and that carries the first transaction carries a TP message sequence number of the first transaction. Specifically, the packet included in the transaction message may carry the TP message sequence number of the first transaction. The same applies to another transaction. Details are not described again.

After receiving the transaction message sent by the first network interface card, the second network interface card may obtain the TP message sequence number in the transaction message. The TP message sequence number is then associated with a bit in the destination completion bitmap. For example, a mapping relationship list between a TP message sequence number and a bit may be established to implement association. A specific implementation of the association is not limited in embodiments of this application. After execution of a transaction obtained from the transaction message is completed, it is marked, in the bit in the association, that execution of a transaction corresponding to the TP message sequence number has been completed. For example, the second network interface card may pre-create the destination completion bitmap, and a length of the destination completion bitmap may be set based on a default value, or may be set based on an indication of the first network interface card. This is not limited in embodiments of this application. The destination completion bitmap is used to mark completion statuses of corresponding transactions in ascending order of TP message sequence numbers. For ease of understanding, for example, refer to FIG. 10B.

In (a) in FIG. 10B, it is assumed that the transport queue includes a transaction A, a transaction B, and a transaction C, and destinations of these transactions are the second network interface card. TP message sequence numbers of the transaction A, the transaction B, and the transaction C are 1, 2, and 3, respectively. It is assumed that default values of bits of the destination completion bitmap pre-created by the second network interface card are 0. In (a) in FIG. 10B, a length of the destination completion bitmap is merely an example. In specific implementation, the length of the destination completion bitmap may be greater than or equal to a quantity of transactions in the transport queue. The first network interface card first obtains the transaction A from the transport queue according to a "first in first out" rule, encapsulates the transaction A into a transaction message A, and sends the transaction message A to the second network interface card. The transaction message A carries the TP message sequence number "1" of the transaction A. After receiving the transaction message A, the second network interface card obtains the TP message sequence number "1" of the transaction A, and finds that the transaction A is the first transaction from the first network interface card. In this case, the TP message sequence number "1" is associated with the first bit in the destination completion bitmap. Then, after execution of the transaction A is completed, the first bit is set to 1. Then, the first network interface card sequentially obtains the transaction B and the transaction C from the transport queue, separately encapsulates the transaction B and the transaction C into a transaction message B and a transaction message C, and sends the transaction message B and the transaction message C to the second network interface card. Due to multi-path transmission, the transaction message C may be transmitted to the second network interface card earlier than the transaction message B. In this case, the second network interface card first obtains the TP message sequence number "3" in the transaction message C, and finds that the transaction C is the third transaction from the first network interface card. In this case, the TP message sequence number "3" is associated with the third bit in the destination completion bitmap. Then, after execution of the transaction C is completed, the third bit is set to 1. In this case, because the transaction message B has not been received, the second bit in the destination completion bitmap is still 0. The second bit in the destination completion bitmap is correspondingly set to 1 only when the second network interface card receives the transaction message B and execution of the transaction B is completed.

Based on the foregoing descriptions, after receiving a transaction request message including the first transaction, the second network interface card may perform marking based on a bit that corresponds to the TP message sequence number of the first transaction in the transaction request message and that is in the destination completion bitmap. In addition, because the first completion order flag is the second-type completion order flag, the second network interface card obtains a related mark in the destination completion bitmap based on an indication of the second-type completion order flag, to determine whether the CQE of the first transaction can be generated.

If the mark in the destination completion bitmap indicates that execution of not all transactions (transactions whose TP message sequence numbers are less than the TP message sequence number of the first transaction) before the first transaction is completed, the second network interface card first does not generate the CQE indicating that execution of the first transaction is completed. If the mark in the destination completion bitmap indicates that execution of all transactions before the first transaction has been completed, corresponding CQEs may be sequentially generated in ascending order of TP message sequence numbers of these transactions whose execution has been completed.

For ease of understanding, FIG. 10B is still used as an example. In (b) in FIG. 10B, it is assumed that a transaction C is the first transaction. After execution of the transaction C is completed by the second network interface card, and the transaction C is marked in the destination completion bitmap, if the destination completion bitmap is shown in the figure, bits corresponding to TP message sequence numbers less than a TP message sequence number of the transaction C are all set to 1, this indicates that execution of all transactions (a transaction A and a transaction B) whose TP message sequence numbers are less than the TP message sequence number of the transaction C has been completed. Therefore, CQEs may be sequentially generated in ascending order of the TP message sequence numbers of the transaction A, the transaction B, and the transaction C. In other words, a CQE of the transaction A is generated first, a CQE of the transaction B is generated, and then a CQE of the transaction C is generated. It may be understood that the descriptions herein are merely examples, and do not constitute a limitation on embodiments of this application.

In a possible implementation, if a CQE that has been generated before the first transaction is executed is not repeatedly generated. For example, before receiving the first transaction, the second network interface card receives a transaction (referred to as a third transaction) whose completion order flag is a first-type completion order flag. The third transaction is also encapsulated into a transaction message, and is sent to the second network interface card after the first-type completion order flag is added to a transaction header of the transaction message. For details, refer to the foregoing descriptions of sending the first transaction. Details are not described herein again. After finishing executing the third transaction, the second network interface card may generate a CQE of the third transaction without waiting. In this case, when the first network interface card finishes executing the first transaction, and the destination completion bitmap indicates that the CQE of the first transaction and the CQEs of the transactions whose execution has been completed before the first transaction can be generated, the CQE of the third transaction is not repeatedly generated. In addition, for another example, if a transaction received by the second network interface card is a transaction corresponding to a first location in the destination completion bitmap, regardless of which completion order flag of the transaction is, a corresponding CQE may be generated without waiting after execution is completed. These CQEs that have been generated are not repeatedly generated in a subsequent process of generating the CQEs in ascending order of the TP message sequence numbers of the transactions whose execution has been completed. For example, the second network interface card may set a destination CQE generation bitmap to mark a generation status of a CQE of a transaction after execution of the transaction is completed.

In a possible implementation, a length of the destination CQE generation bitmap may be the same as the length of the destination completion bitmap. Bits in the destination CQE generation bitmap one-to-one correspond to bits in the destination completion bitmap in order. It is assumed that a default value of the bit in the destination CQE generation bitmap is 0. In this case, after execution of a transaction corresponding to a bit is completed and a CQE is generated, a value of the bit may be set to 1. In addition, it can be learned from the foregoing descriptions that, if the second network interface card receives a transaction that consumes the receive WQE in the receive end transaction queue, the second network interface card generates a corresponding CQE only after execution of the transaction is completed. If the second network interface card receives a transaction that does not consume the receive WQE, the second network interface card does not generate a CQE after execution of the transaction is completed. Instead, a transaction layer ACK is generated and sent to the first network interface card (it may be understood that, after execution of the transaction for which the CQE needs to be generated is completed, the second network interface card also generates a corresponding transaction layer ACK and sends the transaction layer ACK to the first network interface card, to notify the first network interface card that execution of the transaction is completed). In this case, after execution of the transaction that does not consume the receive WQE is completed, a corresponding bit in the destination CQE generation bitmap may be set to 1.

In another possible implementation, a length of the destination CQE generation bitmap is not necessarily the same as the length of the destination completion bitmap. Because the second network interface card receives a transaction that consumes the receive WQE, the second network interface card generates a CQE only after execution of the transaction is completed. It may be set that the destination CQE generation bitmap is used to mark only a generation status of the CQE of the transaction that consumes the receive WQE, and a transaction that does not consume the receive WQE may be ignored. For example, in specific implementation, a bit in the destination CQE generation bitmap may be associated with a TP message sequence number of the transaction that consumes the receive WQE. For specific implementation of the association, refer to the related descriptions of the destination completion bitmap. Details are not described herein again. Then, if the second network interface card finishes executing a transaction that consumes the receive WQE, the second network interface card may mark a corresponding bit based on a TP message sequence number of the transaction (for example, change a default value of the bit from 0 to 1).

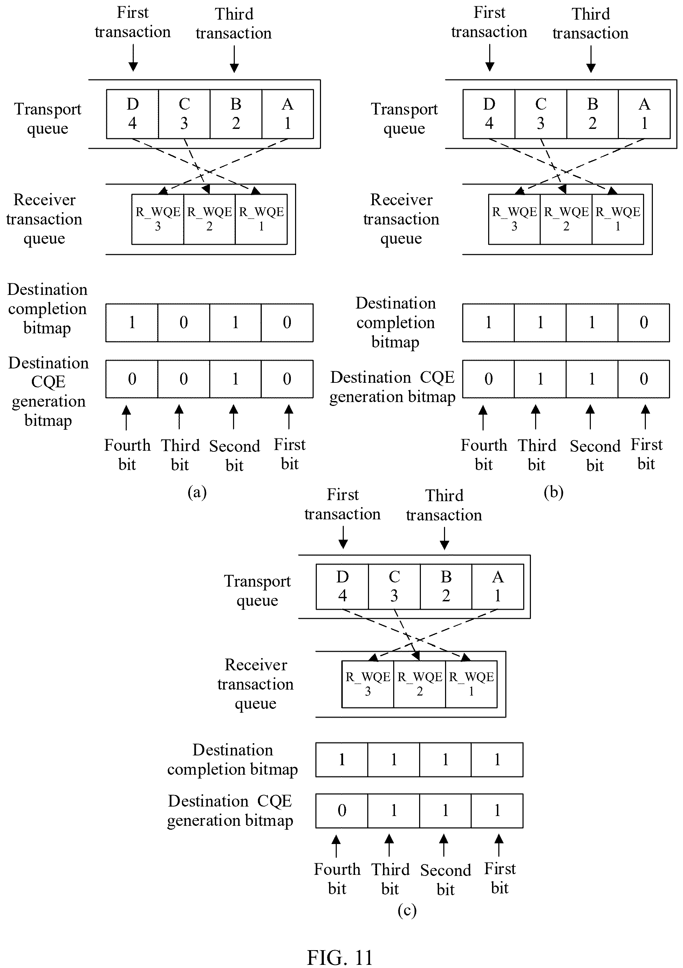

For ease of understanding, the following uses an example in which the length of the destination CQE generation bitmap is the same as the length of the destination completion bitmap for description. For example, refer to FIG. 11.

In (a) in FIG. 11, the transport queue includes four transactions: A, B, C, and D, and corresponding TP message sequence numbers are 1, 2, 3, and 4, respectively. The four TP message sequence numbers are correspondingly associated with four bits of the destination completion bitmap respectively, and similarly, are correspondingly associated with four bits of the destination CQE generation bitmap respectively, which is specifically shown in (a) in FIG. 11. It is assumed that the second network interface card receives the four transactions in an order of the transaction B, the transaction D, the transaction C, and the transaction A (herein, it is assumed that the transactions are transmitted to the second network interface card in an out-of-order manner due to multi-path transmission). In addition, receiving the transaction D, the transaction C, and the transaction A correspondingly consume the receive WQE in the receive end transaction queue, which is specifically shown in (a) in FIG. 11. The second network interface card receives the transaction B without consuming the receive WQE.

It is assumed that a completion order flag of the transaction B in (a) in FIG. 11 is the first-type completion order flag. After receiving and finishing executing the transaction B, the second network interface card may set the second bit in the destination completion bitmap to 1. In addition, because receiving the transaction B does not consume the receive WQE, no CQE is generated. However, the second bit of the destination CQE generation bitmap is still set to 1.

Then, the second network interface card sequentially receives and executes the transaction D in (a) in FIG. 11. A completion order flag of the transaction D is the second-type completion order flag. For ease of understanding associated with the content described above, it may be assumed that the transaction D is the first transaction. After execution of the transaction D is completed, the fourth bit in the destination completion bitmap may be set to 1. Then, a mark in the destination completion bitmap is obtained to determine whether a CQE of the transaction D can be generated. As shown in (a) in FIG. 11, because the transaction A and the transaction C have not been received or have been received but execution is not completed, the first bit and the third bit corresponding to the TP message sequence numbers of the transaction A and the transaction C in the destination completion bitmap are still 0. Therefore, the CQE of the transaction D cannot be generated.

Then, the second network interface card receives and executes the transaction C. A completion order flag of the transaction C is the first-type completion order flag. For ease of understanding associated with the content described above, it may be assumed that the transaction C is the third transaction. After execution of the transaction C is completed, the third bit in the destination completion bitmap is set to 1. Refer to (b) in FIG. 11. In addition, it is determined whether a CQE of the transaction C can be generated. Because the completion order flag of the transaction C is the first-type completion order flag, the CQE of the transaction C can be generated without waiting. In addition, the third bit in the destination CQE generation bitmap is set to 1, as shown in (b) in FIG. 11.

Then, after receiving and executing the transaction A in (a) in FIG. 11, the second network interface card may set the first bit in the destination completion bitmap to 1. Because the transaction A is a transaction corresponding to a first location of the destination completion bitmap, there is no another transaction before the transaction A. In this case, after finishing executing the transaction A, the second network interface card may generate a CQE of the transaction A, and set the first bit of the destination CQE generation bitmap to 1. Refer to (c) in FIG. 11. Then, the second network interface card determines, based on the mark in the destination completion bitmap, that execution of all transactions before the transaction D has been completed. In this case, a CQE generation processing procedure of the transaction D is triggered. Specifically, the mark in the destination CQE generation bitmap may be obtained (as shown in (c) in FIG. 11). The mark in the destination CQE generation bitmap indicates that the CQEs have been generated for all the transactions (the transaction A, the transaction B, and the transaction C) before the transaction D. In this case, the CQE of the transaction is not repeatedly generated. Then, the CQE of the transaction D is correspondingly generated, and the fourth bit in the destination CQE generation bitmap is set to 1.

It may be understood that the related descriptions in FIG. 11 are merely examples, and do not constitute a limitation on embodiments of this application.

In another possible implementation, after finishing executing the first transaction, the second network interface card may alternatively determine, in the following manner based on the indication of the first completion order flag of the first transaction, the occasion for generating the CQE. The following provides example descriptions.

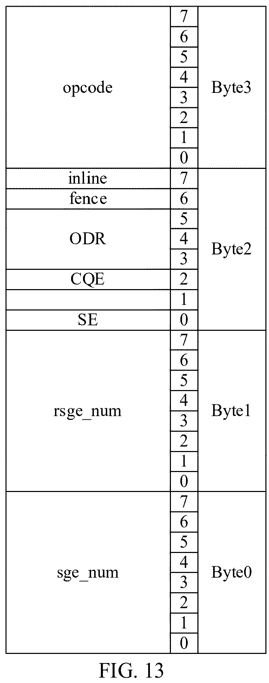

For example, it can be learned from the foregoing descriptions that the transaction scheduled to the transport queue is encapsulated into one or more packets for sending. A number is also assigned to the packet to identify the packet. Numbers of packets corresponding to a plurality of transactions in the transport queue are consecutive. The number may be referred to as a TP packet sequence number (TP packet sequence number, TPPSN). A plurality of packets corresponding to a same transaction carry respective TP message sequence numbers. In addition, these packets further carry information indicating whether to generate a CQE. For example, refer to FIG. 13. The information is carried in a transaction control field in a packet header. For example, the information indicating whether to generate the CQE may be carried in one or more of the plurality of packets. Alternatively, the information indicating whether to generate the CQE may be carried in the last packet (a packet with a largest TP packet sequence number) in the plurality of packets (this is used as an example in the following descriptions). It may be understood that this is merely an example herein, and does not constitute any limitation on embodiments of this application.

In this case, after receiving a packet corresponding to the first transaction, the second network interface card may parse the packet to obtain a TP packet sequence number and information indicating whether to generate the CQE that are in the packet. Then, related information is marked in a preset bitmap (referred to as a receive end mark bitmap) based on the information. The following first describes the receive end mark bitmap.

For example, in the receive end mark bitmap, a granularity of four bits is used to correspond to one received packet. In other words, in the bitmap, the four bits are used to mark information about the received packet. In specific implementation, an association relationship between a TP packet sequence number of the packet and a TP message sequence number carried in the packet may be recorded. In addition, the TP packet sequence number of the received packet may be correspondingly associated with the four bits. For details, refer to the foregoing related descriptions of the association between the TP message sequence number and the bit in the destination completion bitmap and the example descriptions in FIG. 10B. Details are not described herein again. Meanings of the four bits are shown in the following Table 1:

**Table 1**

| Abbreviated name | Meaning | Description |
|---|---|---|
| Pkt_vid_bm | Indicates whether the packet has arrived | 0: The packet has not arrived |
| | | 1: The packet has arrived |
| Msg_fig_bm | Indicates whether the packet is the last packet of a transaction message | 0: The packet is a first or intermediate packet of the transaction message |
| | | 1: The packet is the last or unique packet of the transaction message |
| Cqe_fig_bm | Indicates whether to generate a CQE | 0: No CQE is generated |
| | | 1: The CQE is generated |
| Err_fig_bm | Indicates whether errors such as insufficient JFR, a page fault (page fault), or a forwarding failure occur | 0: No error occurs |
| | | 1: An error occurs |

As shown in Table 1, in the four bits corresponding to the packet, one bit (referred to as a bit 1) is used to mark whether the packet arrives (for example, in the UB transport and baseline transaction specification, a name of the bit may be represented by using the abbreviated name Pkt_vld_bm). For example, if a value of the bit 1 is 0, it indicates that the packet does not arrive; or if a value of the bit is 1, it indicates that the packet has arrived. One bit (referred to as a bit 2) in the four bits is used to mark whether the packet is the last packet of the transaction message (in the UB transport and baseline transaction specification, a name of the bit may be represented by using the abbreviated name Msg_flg_bm). For example, if a value of the bit 2 is 0, it indicates that the packet is the first or intermediate packet of the transaction message; or if a value of the bit is 1, it indicates that the packet is the last or unique packet of the transaction message. One bit (referred to as a bit 3) in the four bits is used to mark whether the CQE needs to be generated for a transaction corresponding to the packet (for example, in the UB transport and baseline transaction specification, a name of the bit may be represented by using the abbreviated name Cqe_fig_bm). For example, if a value of the bit 3 is 0, it indicates that no CQE is generated; or if a value of the bit is 1, it indicates that the CQE is generated. One bit (referred to as a bit 4) in the four bits is used to mark whether an error occurs in a process of receiving the packet (for example, in the UB transport and baseline transaction specification, a name of the bit may be represented by using the abbreviated name Err_flg_bm). For example, if a value of the bit 4 is 0, it indicates that no error occurs; or if a value of the bit is 1, it indicates that the error occurs.

Based on the foregoing descriptions, after receiving the packet corresponding to the first transaction, the second network interface card parses the packet to obtain the TP packet sequence number and the information indicating whether to generate the CQE that are in the packet. Then, corresponding marking is performed in four bits corresponding to the TP packet sequence number in the receive end mark bitmap. For example, a Pkt_vid_bm bit is marked as 1. If the received packet is the last packet, a Msg_fig_bm bit is set to 1. If the last packet indicates that the CQE is generated, a Cqe_flg_bm bit is set to 1. If no error occurs in a process of receiving the packet, an Err_fig_bm bit is set to 0.

Then, after execution of the first transaction is completed, in the receive end mark bitmap, if a bit corresponding to the TP packet sequence number of the packet corresponding to the first transaction indicates that the CQE is generated, whether the CQE can be immediately generated needs to be further determined based on the indication of the first completion order flag of the first transaction. If the first completion order flag is the first-type completion order flag, after finishing executing the first transaction, the second network interface card may generate the CQE of the first transaction without waiting. After the CQE of the first transaction is generated, the Cqe_fig_bm bit of the last packet corresponding to the first transaction in the receive end mark bitmap may be set to 0, to indicate that the second network interface card has generated the CQE.

If the first completion order flag is the second-type completion order flag, after finishing executing the first transaction, the second network interface card further needs to determine whether execution of all the transactions (the transactions whose TP message sequence numbers are less than the TP message sequence number of the first transaction) before the first transaction is completed. For example, at a receive end, a transaction that arrives first is executed first, and an execution speed is fast. Therefore, if the last packet of a transaction has arrived, and all packets whose TP packet sequence numbers are less than that of the last packet have arrived (that is, the packets arrive in order), it may be determined that execution of the transaction and execution of a transaction before the transaction have been completed. A Pkt_vid_bm bit in the receive end mark bitmap may be used to determine whether the packets arrive in order.

Based on the foregoing descriptions, if it is determined that execution of all the transactions before the first transaction has been completed, the corresponding CQEs may be sequentially generated in ascending order of the TP message sequence numbers of these transactions whose execution has been completed. In addition, if the CQE that has been generated before the first transaction is executed is not repeatedly generated, for example, after it is determined that execution of all the transactions before the first transaction has been completed, the receive end mark bitmap may be sequentially traversed in ascending order of the TP message sequence numbers and the previously recorded association relationship between a TP message sequence number and a TP packet sequence number. If a Cqe_fig_bm bit corresponding to a TP message sequence number is 1, a CQE of a transaction corresponding to the TP message sequence number is generated. If a Cqe_flg_bm bit corresponding to a TP message sequence number is 0, generating a CQE of a transaction corresponding to the TP message sequence number is skipped to continue to traverse a value of a Cqe_fig_bm bit corresponding to a next TP message sequence number.

Herein, the Cqe_fig_bm bit corresponding to the TP message sequence number is 0. One possibility is that the second network interface card does not need to consume the receive WQE when receiving the transaction message. Therefore, the packet of the transaction message indicates that the CQE does not need to be generated. The Cqe_fig_bm bit corresponding to the transaction is set to 0 in the receive end mark bitmap. The other possibility is that the second network interface card consumes the receive WQE when receiving the transaction message, and the packet of the transaction message also indicates that the CQE needs to be generated. However, the CQE of the transaction has been generated. Therefore, after generating the CQE of the transaction, the second network interface card sets, in the receive end mark bitmap, the Cqe_flg_bm bit corresponding to the transaction to 0, to avoid repeatedly generating the CQE.

It may be understood that, in the foregoing descriptions, an example in which marking is performed by using the bitmap is mainly used for description. In specific implementation, marking is not limited to being performed by using the bitmap. For example, marking may alternatively be performed by using a list, an array, or a linked list. Details are not described in embodiments of this application.

In a possible implementation, the transaction constructed by the driver may be a structure, in other words, the transaction is described by using the structure. In this case, in a process of constructing the structure, a preset bit in the structure may indicate a place order flag of the transaction. In another possible implementation, another preset bit in the structure may further indicate a completion order flag of the transaction.

For example, in the UB transport and baseline transaction specification, two bits may indicate the place order flag of the transaction.

For example, it can be learned from the foregoing descriptions that the place order flag may include the first-type place order flag, the second-type place order flag, and the third-type place order flag, and optionally, may further include the reserved order flag. In this case, for correspondences between different values of the two bits and the place order flag, refer to Table 2.

**Table 2**

| Values of the two bits | Place order flag |
|---|---|
| 00 | First-type place order flag |
| 01 | Second-type place order flag |
| 10 | Third-type place order flag |
| 11 | Reserved order flag |

It can be seen from Table 2 that, if the values are 00, it indicates the first-type place order flag. If the values are 01, it indicates the second-type place order flag. If the values are 10, it indicates the third-type place order flag. If the values are 11, it indicates the reserved order flag. It may be understood that the correspondences between the different values of the two bits and the place order flag are merely examples. In specific implementation, the correspondence may be adjusted. A specific correspondence is not limited in embodiments of this application.

For example, in the UB transport and baseline transaction specification, one bit may indicate the completion order flag of the transaction.

For example, it can be learned from the foregoing descriptions that the completion order flag may include the first-type completion order flag and the second-type completion order flag. For correspondences between different values of the bit and the completion order flag, refer to Table 3.

**Table 3**

| Value of the bit | Completion order flag |
|---|---|
| 0 | First-type completion order flag |
| 1 | Second-type completion order flag |

It can be seen from Table 3 that, if the value is 0, it indicates the first-type completion order flag. If the value is 1, it indicates the second-type completion order flag. It may be understood that the correspondences between the two different values of the bit and the completion order flag are merely examples. In specific implementation, the correspondence may be adjusted. For example, if the value is 0, it indicates the second-type completion order flag. If the value is 1, it indicates the first-type completion order flag. A specific correspondence is not limited in embodiments of this application.

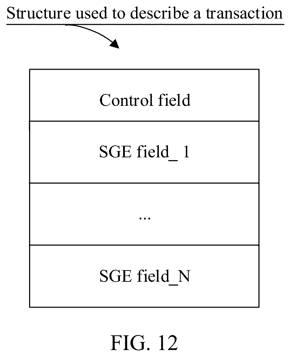

In a possible implementation, in the UB transport and baseline transaction specification, the place order flag of the transaction and the completion order flag of the transaction may be collectively referred to as an order (order, ODR) flag. The ODR flag is indicated by three bits including the two bits indicating the place order flag of the transaction and the one bit indicating the completion order flag of the transaction. For example, the structure used to describe the transaction may include one control field and one or more scatter/gather element (scatter/gather element, SGE) fields, where each SGE field is one data segment (Data Segment). For example, refer to FIG. 12. The control field is used to describe a command type, enable configuration, the ODR flag, and the like. FIG. 13 is an example of a diagram of a partial structure of the control field.

It can be seen from FIG. 13 that the control field includes an opcode (opcode) field, an inline (inline) field, a "fence" (fence) field, an ODR field, a CQE field, an owner (owner) flag field, a solicited event (solicited event, SE) field, an rsge_num field, an sge_num field, and the like.

The opcode field indicates a command type supported by the transaction. The command type includes, for example, send (send), send with immediate (send with immediate), send with invalidate (send with invalidate), write (write), write with immediate (write with immediate), read (read), atomic (atomic) CAS, atomic fetch and add (fetch and add, FAA), masked (masked) atomic CAS, or masked atomic FAA.

The inline field is used to describe inline data carried in the transaction. The fence field is used for fence-type order preservation enable configuration. When this field is set to 1, a fence is enabled. The CQE field indicates whether a CQE is generated. When the CQE field is set to 1, the CQE is generated. The owner flag field is used to identify an owner. The SE field is used for solicited event enable configuration. When the SE field is set to 1, a solicited event is enabled. The rsge_num field indicates a quantity of SGEs of remote data in an RDMA operation. The sge_num field indicates a quantity of SGEs of local data.

The ODR field occupies three bits, as shown in FIG. 13. The three bits are a third bit, a fourth bit, and a fifth bit in Byte2 (Byte). The third bit and the fourth bit indicate the place order flag of the transaction. The fifth bit indicates the completion order flag of the transaction. For a relationship between specific values of the three bits and a corresponding order flag, refer to the descriptions in Table 2 and Table 3. Details are not described herein again.

It may be understood that this is merely an example herein. In specific implementation, the place order flag and the completion order flag of the transaction may be indicated by using a bit in another byte in the transaction structure. This is not limited in embodiments of this application.

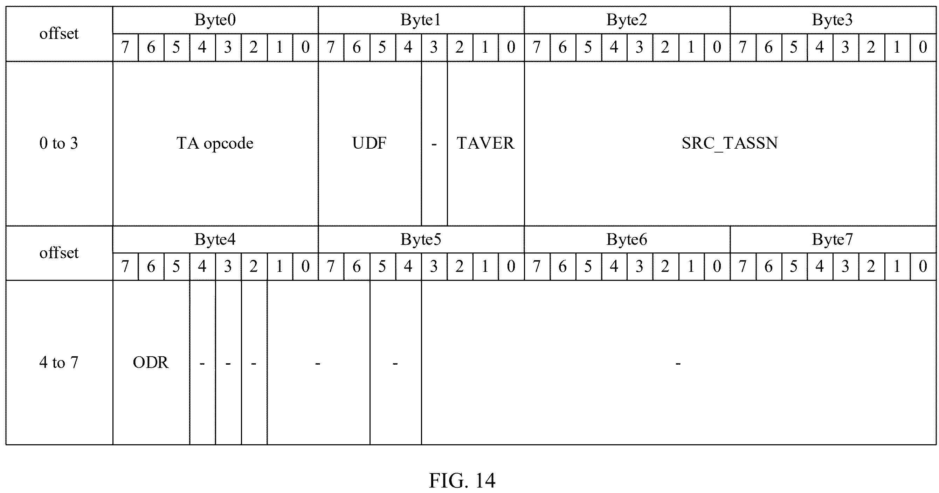

In a possible implementation, in the UB transport and baseline transaction specification, for a structure of the transaction header of the packet included in the transaction message, for example, refer to FIG. 14. It can be seen that the transaction header includes a TA opcode field, a user defined function (user defined function, UDF) field, a transaction version (transaction version, TAVER) field, a source transaction segment sequence number (source TA segment sequence number, SRC_TASSN) field, an ODR field, and the like. Other fields that are not shown are not described herein. For details, refer to the UB transport and baseline transaction specification.

The TA opcode field indicates a command type supported by the packet. For the command type, refer to the related descriptions of the opcode field in FIG. 13. Details are not described herein again. The UDF field allows a data sender to specify function calculation for the packet. Specifically, a requirement may be customized by a user, and this is not limited in the protocol. The TAVER field indicates a protocol version number. The SRC_TASSN field indicates an arrangement number of the transaction at the transaction layer.

The ODR field occupies three bits, as shown in FIG. 14. The three bits are a fifth bit, a sixth bit, and a seventh bit in a Byte 4 in the transaction header. The fifth bit and the sixth bit indicate the place order flag of the transaction. The seventh bit indicates the completion order flag of the transaction. For a relationship between specific values of the three bits and a corresponding order flag, refer to the descriptions in Table 2 and Table 3. Details are not described herein again. It may be understood that this is merely an example herein. In specific implementation, the completion order flag of the transaction may be indicated by using a bit in another byte in the transaction header. This is not limited in embodiments of this application.

The place order flag of the transaction is carried in the transaction header of the packet. On one hand, scalability can be maintained, and on the other hand, consistency with the place order flag and the completion order flag that are carried in the transaction can also be maintained. To reduce resource overheads of data transmission, in another possible implementation, only the completion order flag of the transaction may be carried in the transaction header of the packet, and the place order flag of the transaction is not carried. This is specifically selected based on an actual application requirement. This is not limited in embodiments of this application.

In a possible implementation, the foregoing described embodiment may be alternatively implemented with reference to a fence (FENCE) flag. The fence flag is also a place order flag. A transaction that carries the fence flag can be sent only after execution of all transactions, in a same transaction flow (for example, a same transaction queue), whose TAQ numbers are less than that of the transaction is completed and a transaction layer ACK of a destination is received. Otherwise, the transaction that carries the fence flag keeps waiting in the transaction queue, and a subsequent transaction is blocked and cannot be sent, resulting in queue head blocking.

The following uses an example in which the second-type place order flag is represented by RO and the third-type place order flag is represented by SO for description. In the foregoing embodiment, the SO flag does not block scheduling and sending of the subsequent transaction. However, if the foregoing described embodiment is implemented with reference to the fence flag, the transaction that carries the fence flag can be sent only after execution of all transactions with smaller TAQ numbers is completed, and a transaction with a larger TAQ number cannot be sent before the transaction that carries the fence flag. For example, a same transaction may separately carry an SO flag, or may separately carry a fence flag, or may carry both an SO flag and a fence flag.

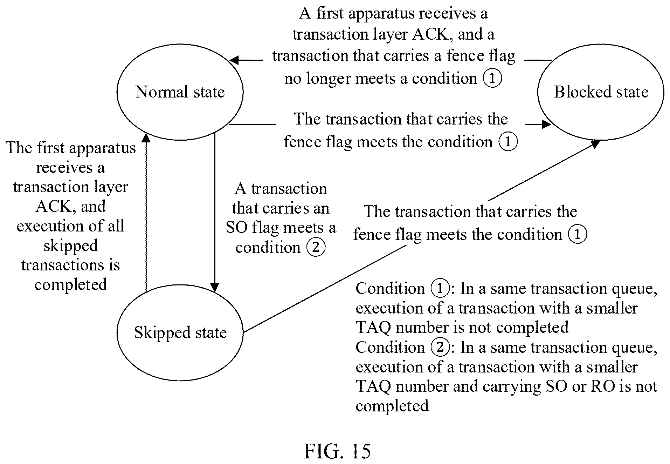

For example, with reference to FIG. 15, the following describes an example of a solution in which the foregoing embodiment is implemented with the fence flag. In FIG. 15, two conditions are first defined. A condition ① is that in a same transaction queue (or transaction flow), execution of a transaction with a smaller TAQ number is not completed. A condition ② is that in a same transaction queue, execution of a transaction with a smaller TAQ number and carrying SO or RO is not completed. In specific implementation, it is first assumed that the transaction queue of the first apparatus is in a normal (Normal) state, that is, in a normal scheduling state, and there is no blocked (Blocked) or skipped (Skipped) transaction. In a normal scheduling process of the transaction queue, the first apparatus obtains a transaction (referred to as a fifth transaction) from the transaction queue. If the fifth transaction carries the fence flag, the first apparatus first determines whether in the transaction queue, a transaction whose execution is not completed exists in a transaction whose TAQ number is less than that of the fifth transaction, that is, determines whether the condition ① is met. If the condition ① is met, scheduling of the fifth transaction is suspended, and the transaction queue changes from the normal state to a blocked state. In the blocked state, a transaction whose TAQ number is greater than that of the fifth transaction is no longer scheduled, and completion of execution of the transaction whose TAQ number is less than that of the fifth transaction is waited for.

In a waiting process, if the first apparatus receives a transaction layer ACK, it indicates that execution of a transaction has been completed. The first apparatus determines the transaction whose execution has been completed based on an identifier of the transaction in the transaction layer ACK. Then, whether the fifth transaction meets the condition ① is determined again. If the fifth transaction still meets the condition ①, waiting continues. If the fifth transaction no longer meets the condition ①, the blocked state may be released, and the fifth transaction is normally scheduled and sent.

In addition, in another possible implementation, in FIG. 15, in the normal scheduling process of the transaction queue, the first apparatus obtains a transaction (for example, the first transaction) from the transaction queue. If the first transaction carries only the SO flag and meets the condition ②, scheduling of the first transaction is suspended, but the first transaction may be skipped to continue to schedule a subsequent transaction that carries an NO flag or an RO flag, and the transaction queue changes from the normal state to a skipped state. In the skipped state, scheduling and sending of the subsequent transaction are not blocked. For specific implementation, refer to the foregoing related descriptions of the third-type place order flag. Details are not described herein again. In the skipped state, if the first apparatus receives a transaction layer ACK, it indicates that execution of a transaction has been completed. The first apparatus determines the transaction whose execution has been completed based on an identifier of the transaction in the transaction layer ACK. Then, whether the first transaction meets the condition ② is determined again. If the first transaction still meets the condition ②, the skipped state is continued to be in. If the first transaction no longer meets the condition ②, that is, execution of all previously skipped transactions is completed, the skipped state may be released, and the first transaction is normally scheduled and sent.

In another possible implementation, in FIG. 15, in the skipped state, if a next transaction after the first transaction is skipped in the transaction queue is a transaction that carries the fence flag, the first apparatus first determines whether a transaction that is in the transaction queue and whose TAQ number is less than that of the transaction that carries the fence flag meets the condition ①. If the condition ① is met, scheduling of the transaction that carries the fence flag is suspended, and the transaction queue changes from the normal state to the blocked state.

The normal state, the blocked state, and the skipped state may be switched for a plurality of times, as shown in FIG. 15. It may be understood that the foregoing descriptions are merely examples, and do not constitute a limitation on embodiments of this application.

For example, the foregoing described embodiment is mainly described by using an example in which the transport layer is reliable but order-preserving. In another possible implementation, when the transport layer is reliable and order-preserving, a packet sent by the first apparatus to the second apparatus may also carry the place order flag and/or the completion order flag. A difference lies in that, when the transport layer is reliable and order-preserving, whether a corresponding transaction can be scheduled and sent does not need to be determined based on an indication of the place order flag, and the transaction may be directly scheduled from the transaction queue to the transport queue for sending. In this implementation, the receive end is required to have a capability of ensuring a transaction place order. Specific implementation is not limited in embodiments of this application.

In conclusion, in this solution, constraint information that is in the transaction and that indicates a place order or a completion order of a transaction may be used to flexibly arrange the place order and the completion order of the transaction. This avoids a performance loss caused by strictly following a queuing order of the transaction in the transaction queue. In addition, the constraint information that is in the transaction and that indicates the place order of the transaction is easy to implement, and can simply and effectively indicate a status of a place order between transactions. This further facilitates identification and operation of a network interface card, and improves processing efficiency. In addition, in this solution, the CQEs are generated in order at the source. This can be compatible with existing interface semantics of order-preserving completion.

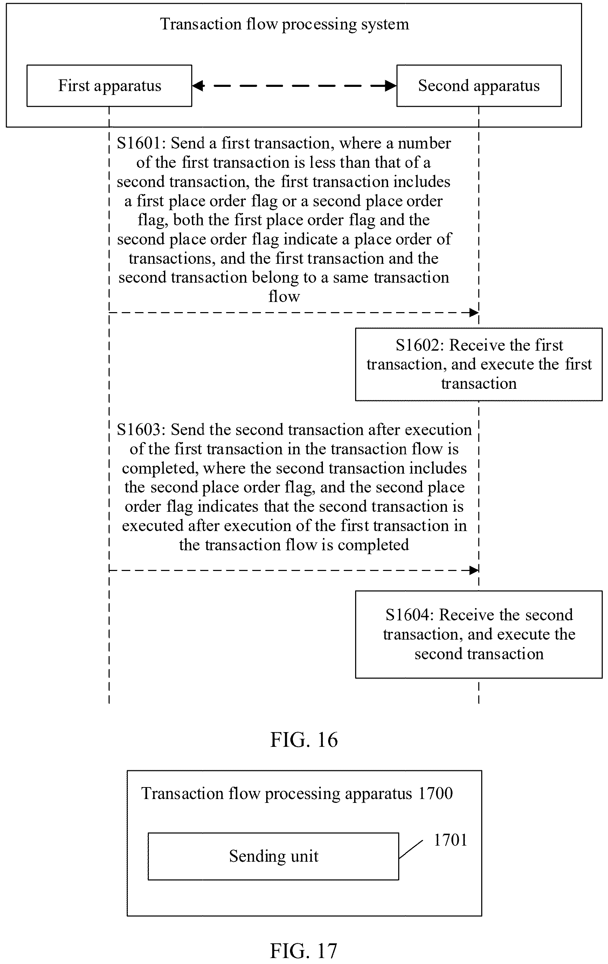

In another possible embodiment, for example, refer to FIG. 16. FIG. 16 shows a transaction flow processing system and a transaction flow processing procedure implemented by the system according to an embodiment of this application. The system includes a first apparatus and a second apparatus. The transaction flow processing procedure includes but is not limited to the following steps.

S1601: The first apparatus is configured to send a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow.

For example, the first place order flag is the second-type place order flag, for example, the RO flag. The second place order flag is the third-type place order flag, for example, the SO flag.

S1602: The second apparatus is configured to receive the first transaction, and execute the first transaction.

S1603: The first apparatus is further configured to send the second transaction after execution of the first transaction in the transaction flow is completed, where the second transaction includes the second place order flag, and the second place order flag indicates that the second transaction is executed after execution of the first transaction in the transaction flow is completed.

S1604: The second apparatus is further configured to receive the second transaction, and execute the second transaction.

For specific implementation of steps S1601 to S1604, refer to the related descriptions "in a possible implementation, if the first place order flag is the second-type place order flag" in step S320 shown in FIG. 3, and refer to the related descriptions in step S330 shown in FIG. 3. Details are not described herein again.

In a possible implementation, the first apparatus is further configured to send the third transaction in the transaction flow, where the third transaction includes the third place order flag, and the third place order flag indicates that the transaction including the third place order flag has no order. For example, the third place order flag is the first-type place order flag, for example, the NO flag. For specific implementation, refer to the related descriptions "in a possible implementation, if the first place order flag is the first-type place order flag" in step S320 shown in FIG. 3. Details are not described herein again.

In a possible implementation, the first apparatus is further configured to: in a process of waiting for completion of execution of the first transaction, send a fourth transaction, where the fourth transaction includes the first place order flag, a number of the fourth transaction is greater than that of the second transaction, and the fourth transaction, the first transaction, and the second transaction all belong to the same transaction flow. For specific implementation, refer to the related descriptions "in a possible implementation, if the first place order flag is the second-type place order flag" in step S320 shown in FIG. 3. Details are not described herein again.

In a possible implementation, the first apparatus is further configured to: in the process of waiting for completion of execution of the first transaction, send a fifth transaction, where the fifth transaction includes a third place order flag, the third place order flag indicates that the transaction including the third place order flag has no order, a number of the fifth transaction is greater than that of the second transaction, and the fifth transaction, the first transaction, and the second transaction all belong to the same transaction flow. For specific implementation, refer to the related descriptions "in a possible implementation, if the first place order flag is the second-type place order flag" in step S320 shown in FIG. 3. Details are not described herein again.

In a possible implementation, the first apparatus is further configured to: send a sixth transaction when execution of all transactions, in the transaction flow, whose numbers are less than that of the sixth transaction is completed, where the sixth transaction includes a fourth place order flag, and the fourth place order flag indicates that the sixth transaction is executed after execution of all the transactions, in the transaction flow, whose numbers are less than that of the sixth transaction is completed. For example, the fourth place order flag is the fence flag. For specific implementation, refer to the foregoing related descriptions of the fence flag. Details are not described herein again.

In a possible implementation, the first apparatus is further configured to send a first completion order flag to the second apparatus, where the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

For example, if the first completion order flag indicates the second apparatus to generate the completion information of the first transaction in order, the first completion order flag may be the foregoing first-type completion order flag, also referred to as an out-of-order completion flag, and may be represented by NO. If the first completion order flag indicates the second apparatus to generate the completion information of the first transaction in the out-of-order manner, the first completion order flag may be the foregoing second-type completion order flag, also referred to as an order-preserving completion flag, and may be represented by CO. For specific implementation, refer to the foregoing related descriptions of the two types of completion order flags. Details are not described herein again.

In a possible implementation, the first completion order flag is located in a fourth byte in a field corresponding to a transaction layer of a packet corresponding to the first transaction.

In a possible implementation, the first place order flag is located in the fourth byte in the field corresponding to the transaction layer of the packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

For locations of the place order flag and the completion order flag in the packet, refer to the descriptions in FIG. 14. Details are not described herein again.

The foregoing mainly describes the transaction flow processing procedure provided in embodiments of this application. It may be understood that, to implement the foregoing corresponding functions, each apparatus includes a corresponding hardware structure and/or a corresponding software module for performing the functions. In combination with example units and steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method examples. For example, functional modules may be obtained through division based on corresponding functions, or at least two functions may be integrated into one module. The integrated module may be implemented in a form of hardware, or may be implemented in a form of a software functional module. It should be noted that, in embodiments of this application, division into modules is an example, and is merely logical function division. In actual implementation, another division manner may be used.

When functional modules are obtained through division based on corresponding functions, an embodiment of this application further provides an apparatus configured to implement any one of the foregoing method embodiments. For example, the provided apparatus includes a unit (or means) configured to implement the steps in any one of the foregoing method embodiments.

For example, FIG. 17 is a diagram of a structure of a transaction flow processing apparatus 1700 according to an embodiment of this application. The transaction flow processing apparatus 1700 shown in FIG. 17 may be configured to implement the foregoing first apparatus. The transaction flow processing apparatus 1700 may include a sending unit 1701.

The sending unit 1701 is configured to send a first transaction, where a number of the first transaction is less than that of a second transaction, the first transaction includes a first place order flag or a second place order flag, both the first place order flag and the second place order flag indicate a place order of transactions, and the first transaction and the second transaction belong to a same transaction flow.

The sending unit 1701 is further configured to send the second transaction after execution of the first transaction in the transaction flow is completed, where the second transaction includes the second place order flag, and the second place order flag indicates that the second transaction is executed after execution of the first transaction in the transaction flow is completed.

In a possible implementation, the sending unit 1701 is further configured to send a third transaction in the transaction flow, where the third transaction includes a third place order flag, and the third place order flag indicates that the third transaction has no order.

In a possible implementation, the sending unit 1701 is further configured to: in a process of waiting for completion of execution of the first transaction, send a fourth transaction, where the fourth transaction includes the first place order flag, a number of the fourth transaction is greater than that of the second transaction, and the fourth transaction, the first transaction, and the second transaction all belong to the same transaction flow.

In a possible implementation, the sending unit 1701 is further configured to: in the process of waiting for completion of execution of the first transaction, send a fifth transaction, where the fifth transaction includes a third place order flag, the third place order flag indicates that the transaction including the third place order flag has no order, a number of the fifth transaction is greater than that of the second transaction, and the fifth transaction, the first transaction, and the second transaction all belong to the same transaction flow.

In a possible implementation, the sending unit 1701 is further configured to send a sixth transaction when execution of all transactions, in the transaction flow, whose numbers are less than that of the sixth transaction is completed, where the sixth transaction includes a fourth place order flag, and the fourth place order flag indicates that the sixth transaction is executed after execution of all the transactions, in the transaction flow, whose numbers are less than that of the sixth transaction is completed.

In a possible implementation, the sending unit 1701 is further configured to send a first completion order flag to a second apparatus, where the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

In a possible implementation, the first completion order flag is located in a fourth byte in a field corresponding to a transaction layer of a packet corresponding to the first transaction.

In a possible implementation, the first place order flag is located in a fourth byte in a field corresponding to a transaction layer of a packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

For specific operations and beneficial effects of the units in the transaction flow processing apparatus 1700 shown in FIG. 17, refer to the descriptions corresponding to the first apparatus in FIG. 3 and FIG. 16, and the possible embodiments of FIG. 3 and FIG. 16. Details are not described herein again.

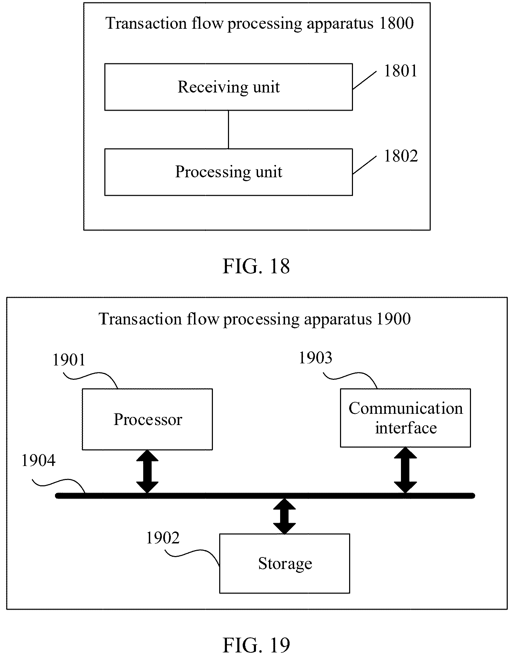

For example, FIG. 18 is a diagram of a structure of a transaction flow processing apparatus 1800 according to an embodiment of this application. The transaction flow processing apparatus 1800 shown in FIG. 18 may be configured to implement the foregoing second apparatus. The transaction flow processing apparatus 1800 may include a receiving unit 1801 and a processing unit 1802.

The receiving unit 1801 is configured to receive a first transaction and a first completion order flag, where the first completion order flag is associated with the first transaction, the first completion order flag indicates a second apparatus to generate completion information of the first transaction in order or indicates the second apparatus to generate the completion information of the first transaction in an out-of-order manner, and the completion information of the first transaction indicates that execution of the first transaction has been completed.

The processing unit 1802 is configured to: execute the first transaction; and generate the completion information of the first transaction based on the first completion order flag.

In a possible implementation, the first completion order flag is located in a fourth byte in a field corresponding to a transaction layer of a packet corresponding to the first transaction.

For specific operations and beneficial effects of the units in the transaction flow processing apparatus 1800 shown in FIG. 18, refer to the descriptions corresponding to the second apparatus in FIG. 3 and FIG. 16, and the possible embodiments of FIG. 3 and FIG. 16. Details are not described herein again.

It should be understood that division into the units in the foregoing server or driving device is merely logical function division. In actual implementation, all or some of the units may be integrated into one physical entity, or may be physically separated. In addition, the units in the apparatus may be implemented in a form of software invoked by a processor. For example, the apparatus includes the processor, the processor is connected to a storage, the storage stores instructions, and the processor invokes the instructions stored in the storage, to implement any one of the foregoing methods or implement functions of the units in the apparatus. The processor is, for example, a general-purpose processor, for example, a central processing unit (central processing unit, CPU) or a microprocessor, and the storage is a storage in the apparatus or a storage outside the apparatus. Alternatively, the units in the apparatus may be implemented in a form of hardware circuit, and functions of some or all of the units may be implemented through design of the hardware circuit. The hardware circuit may be understood as one or more processors. For example, in an implementation, the hardware circuit is an application-specific integrated circuit (application-specific integrated circuit, ASIC), and the functions of some or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA). The field programmable gate array may include a large quantity of logic gate circuits, and a connection relationship between the logic gate circuits is configured based on a configuration file, to implement the functions of some or all of the units. All units of the foregoing apparatus may be implemented in the form of software invoked by the processor; or all units may be implemented in the form of hardware circuit; or some units may be implemented in the form of software invoked by the processor, and the remaining part may be implemented in the form of the hardware circuit.

In embodiments of this application, the processor is a circuit with a data processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

For example, FIG. 19 is a diagram of a structure of a possible physical entity of a transaction flow processing apparatus according to this application. The transaction flow processing apparatus 1900 shown in FIG. 19 may be the server in the method in the foregoing embodiment. The transaction flow processing apparatus 1900 includes a processor 1901, a storage 1902, and a communication interface 1903. The processor 1901, the communication interface 1903, and the storage 1902 may be connected to each other or connected to each other through a bus 1904.

For example, the storage 1902 is configured to store a computer program and data of the transaction flow processing apparatus 1900. The storage 1902 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Software or program code required for all or some of the functions of the server in the foregoing method embodiment is stored in the storage 1902.

In a possible implementation, if software or program code required for some of the functions is stored in the storage 1902, the processor 1901, in addition to invoking the program code in the storage 1902 to implement some functions, may cooperate with another component (for example, the communication interface 1903) to jointly complete another function (for example, a data receiving or sending function) described in the method embodiments.

There may be a plurality of communication interfaces 1903 that are configured to support the transaction flow processing apparatus 1900 in performing communication, for example, receiving or sending data or a signal.

For example, the processor 1901 may be a CPU, a GPU, an NPU, a TPU, a DPU, a microprocessor, a DSP, an ASIC, an FPGA, or a combination of at least two of these processor forms described above. The processor 1901 may be configured to read a program stored in the storage 1902, to perform operations performed by the first apparatus in the methods in FIG. 3 and FIG. 16, and the possible embodiments of FIG. 3 and FIG. 16. Alternatively, in another possible implementation, the processor 1901 may be configured to read a program stored in the storage 1902, to perform the operations performed by the second apparatus in the methods in FIG. 3 and FIG. 16, and the possible embodiments of FIG. 3 and FIG. 16.

For specific operations and beneficial effects of the transaction flow processing apparatus 1900 shown in FIG. 19, refer to the corresponding descriptions in FIG. 3 and FIG. 16, and the possible embodiments of FIG. 3 and FIG. 16. Details are not described herein again.

In a possible implementation, the transaction flow processing apparatus shown in FIG. 17 to FIG. 19 may be implemented as the communication device shown in FIG. 2, or may be implemented as a chip, a processor, a processing system, a network interface card, or a component module obtained by any combination thereof in the communication device.

An embodiment of this application further provides a computer-readable storage medium. The computer-readable storage medium stores a computer program or computer instructions, and the computer program or the computer instructions are executed by a processor to implement the method implemented by the first apparatus in FIG. 3 and FIG. 16, and the possible embodiments of FIG. 3 and FIG. 16.

An embodiment of this application further provides a computer-readable storage medium. The computer-readable storage medium stores a computer program or computer instructions, and the computer program or the computer instructions are executed by a processor to implement the method implemented by the second apparatus in FIG. 3 and FIG. 16, and the possible embodiments of FIG. 3 and FIG. 16.

An embodiment of this application further provides a computer program product. When the computer program product is read and executed by a computer, an operation implemented by the first apparatus in the method in any one of FIG. 3 and FIG. 16, and the possible embodiments of FIG. 3 and FIG. 16 is performed.

An embodiment of this application further provides a computer program product. When the computer program product is read and executed by a computer, an operation implemented by the second apparatus in the method in any one of FIG. 3 and FIG. 16, and the possible embodiments of FIG. 3 and FIG. 16 is performed.

In the foregoing embodiments, the description of each embodiment has respective focuses. For a part that is not described in detail in an embodiment, refer to related descriptions in other embodiments. It should be noted that, for ease of description, the foregoing method embodiments are represented as a series of action combinations. However, a person skilled in the art should appreciate that this application is not limited to the described action order, because according to this application, some steps may be performed in another order or simultaneously. In addition, a person skilled in the art should also appreciate that the embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A transaction flow processing system, wherein the system comprises a first apparatus and a second apparatus;
the first apparatus is configured to send a first transaction, wherein a number of the first transaction is less than that of a second transaction, the first transaction comprises a first place order flag or a second place order flag, both the first place order flag and the second place order flag indicate a place order of transactions, and the first transaction and the second transaction belong to a same transaction flow.
the second apparatus is configured to receive the first transaction, and execute the first transaction;
the first apparatus is further configured to send the second transaction after execution of the first transaction in the transaction flow is completed, wherein the second transaction comprises the second place order flag, and the second place order flag indicates that the second transaction is executed after execution of the first transaction in the transaction flow is completed; and
the second apparatus is further configured to receive the second transaction, and execute the second transaction.

2. The system according to claim 1, wherein the first apparatus is further configured to send a third transaction in the transaction flow, wherein the third transaction comprises a third place order flag, and the third place order flag indicates that the transaction comprising the third place order flag has no order.

3. The system according to claim 1 or 2, wherein the first apparatus is further configured to: in a process of waiting for completion of execution of the first transaction,
send a fourth transaction, wherein the fourth transaction comprises the first place order flag, a number of the fourth transaction is greater than that of the second transaction, and the fourth transaction, the first transaction, and the second transaction all belong to the same transaction flow.

4. The system according to any one of claims 1 to 3, wherein the first apparatus is further configured to: in the process of waiting for completion of execution of the first transaction, send a fifth transaction, wherein the fifth transaction comprises a third place order flag, the third place order flag indicates that the transaction comprising the third place order flag has no order, a number of the fifth transaction is greater than that of the second transaction, and the fifth transaction, the first transaction, and the second transaction all belong to the same transaction flow.

5. The system according to any one of claims 1 to 3, wherein the first apparatus is further configured to:
send a sixth transaction when execution of all transactions, in the transaction flow, whose numbers are less than that of the sixth transaction is completed, wherein the sixth transaction comprises a fourth place order flag, and the fourth place order flag indicates that the sixth transaction is executed after execution of all the transactions, in the transaction flow, whose numbers are less than that of the sixth transaction is completed.

6. The system according to any one of claims 1 to 5, wherein the first apparatus is further configured to send a first completion order flag to the second apparatus, wherein the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

7. The system according to claim 6, wherein the first completion order flag is located in a fourth byte in a field corresponding to a transaction layer of a packet corresponding to the first transaction.

8. The system according to claim 2, wherein the first place order flag is located in a fourth byte in a field corresponding to a transaction layer of a packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

9. A transaction flow processing method, wherein the method comprises:
sending a first transaction, wherein a number of the first transaction is less than that of a second transaction, the first transaction comprises a first place order flag or a second place order flag, both the first place order flag and the second place order flag indicate a place order of transactions, and the first transaction and the second transaction belong to a same transaction flow; and
sending the second transaction after execution of the first transaction in the transaction flow is completed, wherein the second transaction comprises the second place order flag, and the second place order flag indicates that the second transaction is executed after execution of the first transaction in the transaction flow is completed.

10. The method according to claim 9, wherein the method further comprises:
sending a third transaction in the transaction flow, wherein the third transaction comprises a third place order flag, and the third place order flag indicates that the third transaction has no order.

11. The method according to claim 9 or 10, wherein the method further comprises:
in a process of waiting for completion of execution of the first transaction, sending a fourth transaction, wherein the fourth transaction comprises the first place order flag, a number of the fourth transaction is greater than that of the second transaction, and the fourth transaction, the first transaction, and the second transaction all belong to the same transaction flow.

12. The method according to any one of claims 9 to 11, wherein the method further comprises:
in the process of waiting for completion of execution of the first transaction, sending a fifth transaction, wherein the fifth transaction comprises a third place order flag, the third place order flag indicates that the transaction comprising the third place order flag has no order, a number of the fifth transaction is greater than that of the second transaction, and the fifth transaction, the first transaction, and the second transaction all belong to the same transaction flow.

13. The method according to any one of claims 9 to 11, wherein the method further comprises:
sending a sixth transaction when execution of all transactions, in the transaction flow, whose numbers are less than that of the sixth transaction is completed, wherein the sixth transaction comprises a fourth place order flag, and the fourth place order flag indicates that the sixth transaction is executed after execution of all the transactions, in the transaction flow, whose numbers are less than that of the sixth transaction is completed.

14. The method according to any one of claims 9 to 13, wherein the method further comprises:
sending a first completion order flag to a second apparatus, wherein the first completion order flag is associated with the first transaction, the first completion order flag indicates the second apparatus to generate completion information of the first transaction in order or indicates the second apparatus to generate the completion information of the first transaction in an out-of-order manner, and the completion information of the first transaction indicates that execution of the first transaction has been completed.

15. The method according to claim 14, wherein the first completion order flag is located in a fourth byte in a field corresponding to a transaction layer of a packet corresponding to the first transaction.

16. The method according to claim 10, wherein the first place order flag is located in a fourth byte in a field corresponding to a transaction layer of a packet corresponding to the first transaction, the second place order flag is located in a fourth byte in a field corresponding to a transaction layer of a packet corresponding to the second transaction, and the third place order flag is located in a fourth byte in a field corresponding to a transaction layer of a packet corresponding to the third transaction.

17. A transaction flow processing method, wherein the method comprises:
receiving a first transaction and a first completion order flag, wherein the first completion order flag is associated with the first transaction, the first completion order flag indicates a second apparatus to generate completion information of the first transaction in order or indicates the second apparatus to generate the completion information of the first transaction in an out-of-order manner, and the completion information of the first transaction indicates that execution of the first transaction has been completed;
executing the first transaction; and
generating the completion information of the first transaction based on the first completion order flag.

18. The method according to claim 17, wherein the first completion order flag is located in a fourth byte in a field corresponding to a transaction layer of a packet corresponding to the first transaction.

19. A transaction flow processing apparatus, wherein the transaction flow processing apparatus comprises a unit configured to perform the method according to any one of claims 9 to 16.

20. A transaction flow processing apparatus, wherein the transaction flow processing apparatus comprises a unit configured to perform the method according to claim 17 or 18.

21. A transaction flow processing apparatus, comprising a processor, a communication interface, and a storage, wherein the storage is configured to store a computer program and/or data, and the processor is configured to execute the computer program stored in the storage, so that the transaction flow processing apparatus performs the method according to any one of claims 9 to 16.

22. A transaction flow processing apparatus, comprising a processor, a communication interface, and a storage, wherein the storage is configured to store a computer program and/or data, and the processor is configured to execute the computer program stored in the storage, so that the transaction flow processing apparatus performs the method according to claim 17 or 18.

23. A computer-readable storage medium, wherein the computer-readable storage medium stores a computer program, and the computer program is executed by a processor to implement the method according to any one of claims 9 to 16; or
the computer program is executed by the processor to implement the method according to claim 17 or 18.

24. A computer program, wherein when the computer program product is read and executed by a computer, the method according to any one of claims 9 to 16 or the method according to claim 17 or 18 is performed.

25. A chip, wherein the chip comprises a processor and a communication interface, and the chip is configured to perform the method according to any one of claims 9 to 16; or
the chip is configured to perform the method according to claim 17 or 18.
